# EUROPEAN PATENT APPLICATION

(11) **EP 4 654 633 A1**
(43) Date of publication of application: **26.11.2025**
(21) Application number: 24752701.3
(22) Date of filing: 24.01.2024
(51) Int. Cl.: H04W 8/08, H04W 12/06, H04L 9/40

(54) **COMMUNICATION METHOD, SYSTEM AND APPARATUS**

(30) Priority: 11.02.2023 CN 202310136695
(71) Applicant: Huawei Technologies Co., Ltd., Shenzhen, Guangdong 518129 (CN)
(72) Inventor: HU, Li, Shenzhen, Guangdong 518129 (CN); WU, Rong, Shenzhen, Guangdong 518129 (CN)
(74) Representative: Goddar, Heinz J.
(86) International application number: PCT/CN2024/073875
(87) International publication number: WO 2024/164844

(57) **Abstract**

A communication method, system, and apparatus are provided, to improve security of inter-PLMN information sharing. In this application, the communication method includes: A second NWDAF in a second PLMN sends a first request message to a first NWDAF in a first PLMN. Correspondingly, the first NWDAF receives the first request message from the second NWDAF, where the first request message includes a token and an indication of first information requested by the second NWDAF, the token includes indications of a plurality of pieces of information, and the plurality of pieces of information are allowed to be accessed by the second PLMN (or the second NWDAF). When the indications of the plurality of pieces of information that are included in the token include the indication of the first information, the first NWDAF sends the first information to the second NWDAF.

## Description

### CROSS-REFERENCE TO RELATED APPLICATIONS

This application claims priority to Chinese Patent Application No. 202310136695.5, filed with the China National Intellectual Property Administration on February 11, 2023 and entitled "COMMUNICATION METHOD, SYSTEM, AND APPARATUS", which is incorporated herein by reference in its entirety.

### TECHNICAL FIELD

This application relates to the field of communication technologies, and in particular, to a communication method, system, and apparatus.

### BACKGROUND

In a country or region, a cellular mobile communication network of a specific standard of an operator is referred to as a PLMN (public land mobile network, public land mobile network). A PLMN to which a terminal device is subscribed is referred to as a home-PLMN (home-PLMN, H-PLMN), and represents a home operator of a subscriber. When a terminal device leaves a coverage area of the H-PLMN due to movement or another reason, the terminal device may access a visited-PLMN (visited-PLMN, V-PLMN). A process in which the terminal device accesses the V-PLMN may be referred to as roaming.

In the foregoing roaming scenario, a network data analytics function (network data analytics function, NWDAF) in the V-PLMN (denoted as a V-NWDAF) may request information from an NWDAF in the H-PLMN (denoted as an H-NWDAF), to implement inter-PLMN information sharing.

How to improve security of inter-PLMN information sharing is a technical problem that needs to be urgently resolved currently.

### SUMMARY

This application provides a communication method, system, and apparatus, to help improve security of inter-PLMN information sharing.

According to a first aspect, this application provides a communication method. The communication method includes:
A second NWDAF in a second PLMN sends a first request message to a first NWDAF in a first PLMN. Correspondingly, the first NWDAF receives the first request message from the second NWDAF, where the first request message includes a token and an indication of first information requested by the second NWDAF, the token includes indications of a plurality of pieces of information, and the plurality of pieces of information are allowed to be accessed by the second PLMN (or the second NWDAF). When the indications of the plurality of pieces of information that are included in the token include the indication of the first information, the first NWDAF sends the first information to the second NWDAF. In other words, the first NWDAF determines that the indications of the plurality of pieces of information include the indication of the first information, and further sends the first information to the second NWDAF. Correspondingly, the second NWDAF receives the first information from the first NWDAF.

In the foregoing technical solution, the first NWDAF determines, based on the indications of the plurality of pieces of information that are included in the token, whether the first information requested by the second NWDAF is allowed to be obtained by the second NWDAF, to complete authentication on accessing roaming information by the second NWDAF. This helps improve security of inter-PLMN information sharing. In addition, a local policy does not need to be configured in the first NWADF. This reduces configuration complexity.

In a possible implementation, the second NWDAF further sends a second request message to the first NWDAF. Correspondingly, the first NWDAF further receives the second request message from the second NWDAF, where the second request message includes the token and an indication of second information requested by the second NWDAF, and the first information is different from the second information. When the indications of the plurality of pieces of information that are in the token include the indication of the second information, the first NWDAF sends the second information to the second NWDAF. In other words, when determining that the indications of the plurality of pieces of information that are in the token include the indication of the second information, the first NWDAF sends the second information to the second NWDAF. Correspondingly, the second NWDAF receives the second information from the first NWDAF.

In the foregoing technical solution, the first NWDAF determines, based on the same token, whether the second information requested by the second NWDAF is allowed to be obtained by the second NWDAF, to complete the authentication on the accessing the roaming information by the second NWDAF. In other words, the second NWDAF can request the plurality of pieces of information from the first NWDAF based on the same token, so that the second NWDAF does not need to first request the token each time before requesting the information from the first NWDAF. In this way, authentication complexity and communication overheads are reduced.

In a possible implementation, the second NWDAF may further send a third request message to the first NWDAF. Correspondingly, the first NWDAF further receives the third request message from the second NWDAF, where the third request message includes the token and an indication of third information requested by the first NWDAF. When the indications of the plurality of pieces of information that are in the token do not include the indication of the third information, the first NWDAF sends, to the second NWDAF, a rejection message used to reject the third request message. In other words, when determining that the indications of the plurality of pieces of information that are in the token do not include the indication of the third information, the first NWDAF sends the rejection message to the second NWDAF. Correspondingly, the second NWDAF receives the rejection message from the first NWDAF.

In the foregoing technical solution, the first NWDAF may further determine, based on the token, that the second NWDAF does not have permission to access the third information, and then send the rejection message to the second NWDAF. This helps ensure security of information in a roaming scenario.

In a possible implementation, that the second NWDAF sends the first request message to the first NWDAF may be specifically: When the indications of the plurality of pieces of information that are in the token include the indication of the first information, the second NWDAF sends the first request message to the first NWDAF. In a possible implementation, after determining that the indications of the plurality of pieces of information that are in the token include the indication of the first information, the second NWDAF sends the first request message to the first NWDAF. In other words, the second NWDAF sends the first request message based on indications of a plurality of pieces of to-be-requested information and the indications of the plurality of pieces of information that are included in the token, where both the indications of the plurality of pieces of to-be-requested information and the first request message include the indication of the first information. In the foregoing technical solution, the second NWDAF determines, based on the token, the first information that the second NWDAF is allowed to access, and includes the indication of the first information in the first request message, to help improve a success rate of obtaining information by the second NWDAF.

In a possible implementation, that the second NWDAF sends the first request message to the first NWDAF may be specifically: Information requested by the second NWDAF includes the first information and the third information. When the indications of the plurality of pieces of information that are in the token include the indication of the first information but do not include the indication of the third information, the second NWDAF sends the first request message to the first NWDAF, where the first request message does not include the indication of the third information. In a possible implementation, the second NWDAF determines that the to-be-requested information includes the first information and the third information. Then, after determining that the indications of the plurality of pieces of information that are in the token include the indication of the first information but do not include the indication of the third information, the second NWDAF sends the first request message to the first NWDAF. In other words, the second NWDAF sends the first request message based on the indications of the plurality of pieces of to-be-requested information and the indications of the plurality of pieces of information that are included in the token, where the indications of the plurality of pieces of to-be-requested information include the indication of the first information and the indication of the third information, and the first request message does not include the indication of the third information. In the foregoing technical solution, the second NWDAF determines, based on the token, the first information that the second NWDAF is allowed to access and the third information that the second NWDAF is not allowed to access. Correspondingly, the first request message sent by the second NWDAF includes the indication of the first information but does not include the indication of the third information. This improves the success rate of obtaining the information by the second NWDAF, and reduces communication load.

In a possible implementation, before the first NWDAF sends the first information to the second NWDAF, the method further includes: The first NWDAF determines that the token passes verification. In this way, the security of the information is ensured.

In a possible implementation, the information is roaming data. In a possible implementation, the indication of the information includes one or more of the following: a data specification (data specification), an event identifier (event ID), event filter information (event filter information), target of event reporting (target of event reporting), and a bulked data type parameter (bulked data type parameter). In a possible implementation, the first PLMN further includes a first network function (network function, NF), and before the first NWDAF sends the first information to the second NWDAF, the method further includes: The first NWDAF sends an indication of the roaming data to the first NF, the first NF sends the roaming data to the first NWDAF based on the indication of the roaming data, and the first NWDAF receives the roaming data from the first NF. The foregoing technical solution provides a scenario in which the second NWDAF requests the roaming data in the first PLMN from the first NWDAF, so that the second NWDAF can perform data analysis based on the roaming data in the first PLMN.

In a possible implementation, the information is a roaming analytics result. In a possible implementation, the indication of the information includes one or more of the following: an analytics specification (analytics specification), an analytics identifier (analytics ID), an event identifier (event ID), and target of analytics reporting (target of analytics reporting). In a possible implementation, the second PLMN includes a second NF, and before the second NWDAF sends a token request message, the second NWDAF further receives an indication of the roaming analytics result from the second NF. Before the first NWDAF sends the first information to the second NWDAF, the first NWDAF further determines the roaming analytics result based on the indication of the roaming analytics result and an analytics result of the first NWDAF. After receiving the first information from the first NWDAF, the second NWDAF further sends the roaming analytics result to the second NF. The foregoing technical solution provides a scenario in which the second NWDAF requests the roaming analytics result in the second PLMN from the first NWDAF, and sends the requested roaming analytics result to a first NF for use by the first NF.

In a possible implementation, the first PLMN further includes a first network repository function (network repository function, NRF). The first NRF receives a token request message, where the token request message includes an identifier of the second PLMN. The first NRF determines the indications of the plurality of pieces of information that correspond to the identifier of the second PLMN. The first NRF sends the token, where the token includes the indications of the plurality of pieces of information that correspond to the identifier of the second PLMN. In the foregoing technical solution, when generating the token for the second PLMN, the first NRF includes, in the token, the indications of the plurality of pieces of information that correspond to the identifier of the second PLMN. The plurality of pieces of information indicate information that the second PLMN is allowed to access. In this way, the security of the inter-PLMN information sharing is improved. Further, the token generated by the first NRF is specific to a PLMN granularity. This reduces the authentication complexity and the communication overheads.

In a possible implementation, the second PLMN further includes a second NRF. That the first NRF receives the token request message may be specifically: The first NRF receives the token request message from the second NRF. Further, the token request message is sent after the second NRF receives the token request message from the second NWDAF. In other words, after generating the token request message, the second NWDAF sends the token request message to the second NRF. Correspondingly, the second NRF receives the token request message from the second NWDAF, and sends the token request message to the first NRF.

In a possible implementation, that the first NRF sends the token may be specifically: The first NRF sends the token to the second NRF. Further, after receiving the token from the first NRF, the second NRF forwards the token to the second NWDAF. Correspondingly, the second NWDAF receives the token from the second NRF.

In a possible implementation, the indications that are included in the token and that are of the plurality of pieces of information that correspond to the identifier of the second PLMN include the indication of first information and the indication of the second information, the first information is information requested by using the first request message, the second information is information requested by using the second request message, the first request message and the second request message are from the second NWDAF in the second PLMN, and the first information is different from the second information. In the foregoing technical solution, the token includes the indications of the plurality of pieces of information, and the second NWDAF in the second PLMN may separately request the first information and the second information based on the token, and does not need to first request the token each time before requesting information. This reduces the authentication complexity and the communication overheads.

It may also be understood that the indications that are included in the token and that are of the plurality of pieces of information that correspond to the identifier of the second PLMN are used to verify the first request message and the second request message. The first request message and the second request message are request messages that are from the second NWDAF in the second PLMN and that are used to request different information. In this way, the second NWDAF in the second PLMN may separately send the first request message and the second request message based on the token to request the different information, and does not need to first request the token each time before requesting information. This reduces the authentication complexity and the communication overheads.

Alternatively, it may be further understood that the indications that are in the token and that are of the plurality of pieces of information that correspond to the identifier of the second PLMN are used to determine whether the first information requested by using the first request message and the second information requested by using the second request message are allowed to be obtained by the second PLMN, and the first request message and the second request message are from the second NWDAF in the second PLMN. In this way, the second NWDAF in the second PLMN may separately request the first information and the second information based on the token, and does not need to first request the token each time before requesting the information. This reduces the authentication complexity and the communication overheads.

In a possible implementation, that the first NRF determines the indications of the plurality of pieces of information that correspond to the identifier of the second PLMN may be specifically: The first NRF determines, based on preconfigured information, the indications of the plurality of pieces of information that correspond to the identifier of the second PLMN, where the preconfigured information includes a correspondence between the identifier of the second PLMN and the indications of the plurality of pieces of information. In the foregoing technical solution, a correspondence using a PLMN as a granularity is provided, and the first NRF may determine, based on the correspondence using the PLMN granularity, the indications of the plurality of pieces of information that correspond to the identifier of the second PLMN.

In a possible implementation, the token request message further includes a slice identifier, and the preconfigured information includes a correspondence between the identifier of the second PLMN, the slice identifier, and the indications of the plurality of pieces of information. That the first NRF determines, based on the preconfigured information, the indications of the plurality of pieces of information that correspond to the identifier of the second PLMN may be specifically: The first NRF determines, based on the preconfigured information, the indications of the plurality of pieces of information that correspond to the identifier of the second PLMN and the slice identifier. In the foregoing technical solution, the correspondence further includes the slice identifier, to implement a correspondence of a finer granularity. The first NRF may determine, based on the identifier of the second PLMN and the slice identifier, the indications of the plurality of pieces of information that correspond to the identifier of the second PLMN and the slice identifier. The slice identifier may be specifically network slice selection assistance information (network slice selection assistance information, NSSAI).

In a possible implementation, the token request message further includes an NF service name. That the first NRF determines the indications of the plurality of pieces of information that correspond to the identifier of the second PLMN may be specifically: When the NF service name indicates to request roaming data or request a roaming analytics result, the first NRF determines the indications of the plurality of pieces of information that correspond to the identifier of the second PLMN. In other words, when determining that the NF service name indicates to request the roaming data or request the roaming analytics result, the first NRF determines the indications of the plurality of pieces of information that correspond to the identifier of the second PLMN. In the foregoing technical solution, a condition for the first NRF to determine the indications of the plurality of pieces of information that correspond to the identifier of the second PLMN is provided. In another possible implementation, the token request message further includes an NF provider type (NF provider type) and an NF consumer type (NF consumer type). That the first NRF determines the indications of the plurality of pieces of information that correspond to the identifier of the second PLMN may be specifically: When both the NF provider type and the NF consumer type are an NWDAF, the first NRF determines the indications of the plurality of pieces of information that correspond to the identifier of the second PLMN. In other words, when determining that both the NF provider type and the NF consumer type are the NWDAF, the first NRF determines the indications of the plurality of pieces of information that correspond to the identifier of the second PLMN. In the foregoing technical solution, another condition for the first NRF to determine the indications of the plurality of pieces of information that correspond to the identifier of the second PLMN is provided.

In a possible implementation, that the first information is different from the second information may be specifically: A field in the indication of the first information is not completely the same as a field in the indication of the second information. Alternatively, that the first information is different from the second information may be specifically: When a field in the indication of the first information is completely the same as a field in the indication of the second information, two values corresponding to a same field in the indication of the first information and the indication of the second information are different.

According to a second aspect, this application provides a communication method. The communication method includes: A first NRF in a first PLMN receives a token request message, where the token request message includes an identifier of a second PLMN. The first NRF determines indications of a plurality of pieces of information that correspond to the identifier of the second PLMN. The first NRF sends a token, where the token includes the indications of the plurality of pieces of information that correspond to the identifier of the second PLMN, and the plurality of pieces of information corresponding to the identifier of the second PLMN are allowed to be accessed by the second PLMN.

In the foregoing technical solution, when generating the token for the second PLMN, the first NRF includes, in the token, the indications of the plurality of pieces of information that correspond to the identifier of the second PLMN. The indications of the plurality of pieces of information indicate the information that the second PLMN is allowed to access. This helps improve security of inter-PLMN information sharing. In addition, a local policy does not need to be configured in an NWDAF in the first PLMN. This reduces configuration complexity.

In a possible implementation, the second PLMN includes a second NWDAF and a second NRF. That the first NRF receives the token request message may be specifically: The first NRF receives the token request message from the second NRF. Further, the token request message is sent after the second NRF receives a token request message from the second NWDAF. In other words, after generating the token request message, the second NWDAF sends the token request message to the second NRF. Correspondingly, the second NRF receives the token request message from the second NWDAF, and sends the token request message to the first NRF.

In a possible implementation, that the first NRF sends the token may be specifically: The first NRF sends the token to the second NRF. Further, after receiving the token from the first NRF, the second NRF forwards the token to the second NWDAF. Correspondingly, the second NWDAF receives the token from the second NRF.

In a possible implementation, the indications that are included in the token and that are of the plurality of pieces of information that correspond to the identifier of the second PLMN include an indication of first information and an indication of second information, the first information is information requested by using a first request message, the second information is information requested by using a second request message, the first request message and the second request message are from the second NWDAF in the second PLMN, and the first information is different from the second information. It may also be understood that the indications that are included in the token and that are of the plurality of pieces of information that correspond to the identifier of the second PLMN are used to verify the first request message and the second request message. The first request message and the second request message are request messages that are from the second NWDAF in the second PLMN and that are used to request different information. Alternatively, it may be further understood that the indications of the plurality of pieces of information that correspond to the identifier of the second PLMN in the token are used to determine whether the first information requested by using the first request message and the second information requested by using the second request message are allowed to be obtained by the second PLMN, and the first request message and the second request message are from the second NWDAF in the second PLMN.

In a possible implementation, that the first NRF determines the indications of the plurality of pieces of information that correspond to the identifier of the second PLMN may be specifically: The first NRF determines, based on preconfigured information, the indications of the plurality of pieces of information that correspond to the identifier of the second PLMN, where the preconfigured information includes a correspondence between the identifier of the second PLMN and the indications of the plurality of pieces of information.

In a possible implementation, the token request message further includes a slice identifier, and the preconfigured information includes a correspondence between the identifier of the second PLMN, the slice identifier, and the indications of the plurality of pieces of information. That the first NRF determines, based on the preconfigured information, the indications of the plurality of pieces of information that correspond to the identifier of the second PLMN may be specifically: The first NRF determines, based on the preconfigured information, the indications of the plurality of pieces of information that correspond to the identifier of the second PLMN and the slice identifier.

In a possible implementation, the token request message further includes an NF service name. That the first NRF determines the indications of the plurality of pieces of information that correspond to the identifier of the second PLMN may be specifically: When the NF service name indicates to request roaming data or request a roaming analytics result, the first NRF determines the indications of the plurality of pieces of information that correspond to the identifier of the second PLMN. In still another possible implementation, the token request message further includes an NF provider type and an NF consumer type. That the first NRF determines the indications of the plurality of pieces of information that correspond to the identifier of the second PLMN may be specifically: When both the NF provider type and the NF consumer type are an NWDAF, the first NRF determines the indications of the plurality of pieces of information that correspond to the identifier of the second PLMN.

In a possible implementation, the information is roaming data. In a possible implementation, the indication of the information includes one or more of the following: a data specification, an event identifier, event filter information, target of event reporting, and a bulked data type parameter.

In a possible implementation, the information is a roaming analytics result. In a possible implementation, the indication of the information includes one or more of the following: an analytics specification, an analytics identifier, an event identifier, and target of analytics reporting.

For an implementation that is not described in detail in any possible implementation of the second aspect, refer to descriptions of the implementations of the first aspect. For beneficial effects that are not described in detail in any possible implementation of the second aspect, refer to descriptions of beneficial effects in the first aspect. Details are not described herein again.

According to a third aspect, this application provides a communication system. The communication system includes a first NRF and a first NWDAF that are located in a first PLMN.

The first NRF is configured to: receive a token request message, where the token request message includes an identifier of a second PLMN; determine indications of a plurality of pieces of information that correspond to the identifier of the second PLMN; and send a token, where the token includes the indications of the plurality of pieces of information that correspond to the identifier of the second PLMN, and the plurality of pieces of information corresponding to the identifier of the second PLMN are allowed to be accessed by the second PLMN.

The first NWDAF is configured to: receive a first request message from a second NWDAF in the second PLMN, where the first request message includes the token and an indication of requested first information; and when the indications of the plurality of pieces of information that are in the token include the indication of the first information, send the first information to the second NWDAF.

In a possible implementation, the indications of the plurality of pieces of information that correspond to the identifier of the second PLMN include the indication of the first information and an indication of second information, the first information is information requested by using the first request message, the second information is information requested by using a second request message, the first request message and the second request message are from the second NWDAF in the second PLMN, and the first information is different from the second information.

In a possible implementation, the communication system further includes the second NWDAF, and the second NWDAF is configured to: send a token request message; and receive the token. In a possible implementation, the second NWDAF is further configured to: send the first request message to the first NWDAF; and receive the first information from the first NWDAF.

In a possible implementation, the communication system further includes a first NF located in the first PLMN, and the first information is roaming data. The first NF is configured to: receive a data request message from the first NWDAF, where the data request message includes an indication of the roaming data; and send the roaming data to the first NWDAF. Before sending the first information to the second NWDAF, the first NWDAF is further configured to: send the data request message to the first NF; and receive the first information from the first NF.

In a possible implementation, the communication system further includes a second NF located in the second PLMN, the first information is a roaming analytics result, and the second NF is configured to: send an indication of the roaming analytics result to the second NWDAF; and receive the roaming analytics result from the second NWDAF. Before sending the first request message to the first NWDAF, the second NWDAF is further configured to receive the indication of the roaming analytics result from the second NF. After receiving the first information (that is, the roaming analytics result) from the first NWDAF, the second NWDAF is further configured to send the roaming analytics result to the second NF. Before sending the first information (that is, the roaming analytics result) to the second NWDAF, the first NWDAF is further configured to determine the roaming analytics result based on the indication of the roaming analytics result and an analytics result of the first NWDAF.

For an implementation that is not described in detail in any possible implementation of the third aspect, refer to descriptions of the implementations of the first aspect. For beneficial effects that can be achieved in the third aspect, refer to descriptions of beneficial effects in the first aspect or the second aspect. Details are not described herein again.

According to a fourth aspect, this application provides a communication apparatus, including a processor and a communication interface. The communication interface is configured to: receive a signal from a communication apparatus other than the communication apparatus, and transmit the signal to the processor; or send a signal from the processor to a communication apparatus other than the communication apparatus. The processor is configured to implement the method in any one of the first aspect or the possible implementations of the first aspect through a logic circuit or by executing code instructions, the processor is configured to implement the method performed by the first NRF in any one of the first aspect or the possible implementations of the first aspect through a logic circuit or by executing code instructions, the processor is configured to implement the method performed by the first NWDAF in any one of the first aspect or the possible implementations of the first aspect through a logic circuit or by executing code instructions, the processor is configured to implement the method performed by the first NF in any one of the first aspect or the possible implementations of the first aspect through a logic circuit or by executing code instructions, the processor is configured to implement the method performed by the second NRF in any one of the first aspect or the possible implementations of the first aspect through a logic circuit or by executing code instructions, the processor is configured to implement the method performed by the second NWDAF in any one of the first aspect or the possible implementations of the first aspect through a logic circuit or by executing code instructions, or the processor is configured to implement the method performed by the second NF in any one of the first aspect or the possible implementations of the first aspect through a logic circuit or by executing code instructions. In a possible implementation, a structure of the communication apparatus further includes a memory. The memory stores program code instructions and data that are necessary for the communication apparatus. The memory may be integrated with the processor, or may be disposed separately from the processor. For technical effects that can be achieved in the fourth aspect, refer to descriptions of beneficial effects in the first aspect. Details are not described herein again.

According to a fifth aspect, this application provides a communication apparatus, including a module for implementing the method in any one of the first aspect or the possible implementations of the first aspect, including a module for implementing the method performed by the first NRF in any one of the first aspect or the possible implementations of the first aspect, including a module for implementing the method performed by the first NWDAF in any one of the first aspect or the possible implementations of the first aspect, including a module for implementing the method performed by the first NF in any one of the first aspect or the possible implementations of the first aspect, including a module for implementing the method performed by the second NRF in any one of the first aspect or the possible implementations of the first aspect, including a module for implementing the method performed by the second NWDAF in any one of the first aspect or the possible implementations of the first aspect, or including a module for implementing the method performed by the second NF in any one of the first aspect or the possible implementations of the first aspect. For technical effects that can be achieved in the fifth aspect, refer to descriptions of beneficial effects in the first aspect. Details are not described herein again.

According to a sixth aspect, this application provides a computer-readable storage medium. The storage medium stores a computer program or instructions. When the computer program or the instructions are executed by a communication apparatus, the method in any one of the first aspect or the possible implementations of the first aspect is implemented, the method performed by the first NRF in any one of the first aspect or the possible implementations of the first aspect is implemented, the method performed by the first NWDAF in any one of the first aspect or the possible implementations of the first aspect is implemented, the method performed by the first NF in any one of the first aspect or the possible implementations of the first aspect is implemented, the method performed by the second NRF in any one of the first aspect or the possible implementations of the first aspect is implemented, the method performed by the second NWDAF in any one of the first aspect or the possible implementations of the first aspect is implemented, or the method performed by the second NF in any one of the first aspect or the possible implementations of the first aspect is implemented. For technical effects that can be achieved in the sixth aspect, refer to descriptions of beneficial effects in the first aspect. Details are not described herein again.

According to a seventh aspect, this application provides a computer program product. The computer program product includes a computer program or instructions. When the computer program or the instructions are executed by a communication apparatus, the method in any one of the first aspect or the possible implementations of the first aspect is implemented, the method performed by the first NRF in any one of the first aspect or the possible implementations of the first aspect is implemented, the method performed by the first NWDAF in any one of the first aspect or the possible implementations of the first aspect is implemented, the method performed by the first NF in any one of the first aspect or the possible implementations of the first aspect is implemented, the method performed by the second NRF in any one of the first aspect or the possible implementations of the first aspect is implemented, the method performed by the second NWDAF in any one of the first aspect or the possible implementations of the first aspect is implemented, or the method performed by the second NF in any one of the first aspect or the possible implementations of the first aspect is implemented. For technical effects that can be achieved in the seventh aspect, refer to descriptions of beneficial effects in the first aspect. Details are not described herein again.

According to an eighth aspect, an embodiment of this application provides a chip system, including a processor. The processor is coupled to a memory, and the memory is configured to store a program or instructions. When the program or the instructions are executed by the processor, the chip system is enabled to implement the method in any one of the first aspect or the possible implementations of the first aspect, implement the method performed by the first NRF in any one of the first aspect or the possible implementations of the first aspect, implement the method performed by the first NWDAF in any one of the first aspect or the possible implementations of the first aspect, implement the method performed by the first NF in any one of the first aspect or the possible implementations of the first aspect, implement the method performed by the second NRF in any one of the first aspect or the possible implementations of the first aspect, implement the method performed by the second NWDAF in any one of the first aspect or the possible implementations of the first aspect, or implement the method performed by the second NF in any one of the first aspect or the possible implementations of the first aspect. Optionally, the chip system further includes an interface circuit, and the interface circuit is configured to exchange code instructions with the processor. Optionally, there may be one or more processors in the chip system, and the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. Optionally, there may also be one or more memories in the chip system. The memory may be integrated with the processor, or may be disposed separately from the processor. For example, the memory may be a non-transitory processor, for example, a read-only memory ROM. The memory and the processor may be integrated on a same chip, or may be separately disposed on different chips. For technical effects that can be achieved in the eighth aspect, refer to descriptions of beneficial effects in the first aspect. Details are not described herein again.

### BRIEF DESCRIPTION OF DRAWINGS

FIG. 1 is a schematic of a 5G network architecture;
FIG. 2 is a schematic of a network architecture in a local breakout roaming scenario;
FIG. 3 is a schematic flowchart of an example of a first communication method according to this application;
FIG. 4 is a schematic flowchart of an example of a second communication method according to this application;
FIG. 5 is a schematic flowchart of an example of requesting roaming data in an inter-PLMN manner according to this application;
FIG. 6 is a schematic flowchart of an example of requesting a roaming analytics result in an inter-PLMN manner according to this application;
FIG. 7 is a schematic flowchart of an example of a communication apparatus according to this application; and
FIG. 8 is a schematic flowchart of an example of another communication apparatus according to this application.

### DESCRIPTION OF EMBODIMENTS

FIG_{.} 1 is a schematic of a 5G network architecture. The 5G network architecture may include a terminal device, an access network device, and a core network device. The terminal device accesses a data network (data network, DN) via the access network device and the core network device.

The core network device includes some or all of the following network elements or functions: a unified data management (unified data management, UDM), a unified data repository (unified data repository, UDR), a network exposure function (network exposure function, NEF), an application function (application function, AF), a policy control function (policy control function, PCF), an access and mobility management function (access and mobility management function, AMF), a session management function (session management function, SMF), a user plane function (user plane function, UPF), a network data analytics function (network data analytics function, NWDAF), a network repository function (network repository function, NRF), a location management function (location management function, LMF), a network slice selection function (network slice selection function, NSSF), an authentication server function (authentication server function, AUSF), and a network slice-specific authentication and authorization function (network slice-specific authentication and authorization function, NSSAAF).

The access network device may be a radio access network (radio access network, RAN) device, for example, a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, a base station in a future mobile communication system, or an access node in a wireless fidelity (wireless fidelity, Wi-Fi) system; or may be a module or a unit that implements some functions of a base station, for example, may be a central unit (central unit, CU), or may be a distributed unit (distributed unit, DU). The radio access network device may be a macro base station, may be a micro base station or an indoor base station, or may be a relay node, a donor node, or the like. A specific technique and a specific device form that are used by the radio access network device are not limited in embodiments of this application.

The terminal device may be user equipment (user equipment, UE), a mobile station, a mobile terminal, or the like. The terminal device may be widely used in various scenarios, for example, a device-to-device (device-to-device, D2D) scenario, a vehicle-to-everything (vehicle-to-everything, V2X) communication scenario, a machine type communication (machine type communication, MTC) scenario, an internet of things (internet of things, IOT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal device may be a mobile phone, a tablet computer, a computer with a wireless transceiver function, a wearable device, a vehicle, an urban air transportation vehicle (such as an unmanned aerial vehicle or a helicopter), a steamship, a robot, a robot arm, a smart home device, or the like.

The access network device and the terminal device may be at fixed locations, or may be movable. The access network device and the terminal device may be deployed terrestrially, including indoors or outdoors, or may be handheld or vehicle-mounted; may be deployed on a water surface; or may be deployed on a plane, a balloon, or a man-made satellite in the air. Application scenarios of the access network device and the terminal device are not limited in embodiments of this application.

The AMF includes functions of mobility management, access authentication/authorization, and the like. In addition, the AMF is also responsible for transferring a user policy between the terminal device and the PCF.

The SMF includes functions of session management, execution of a control policy delivered by the PCF, UPF selection, terminal device internet protocol (internet protocol, IP) address allocation, and the like.

The UPF serves as an interface with the DN, and includes functions of user plane data forwarding, charging statistics based on a session/a flow level, bandwidth throttling, and the like.

The UDM includes functions of subscription data management, user access authorization, and the like.

The UDR includes functions of storage and retrieval of subscription data, policy data, application data, and another type of data.

The NEF is configured to support exposure of a capability and an event.

The AF transfers a requirement of an application side for a network side, for example, a quality of service (quality of service, QoS) requirement or user status event subscription. The AF may be a third-party functional entity, or may be an application server deployed by an operator.

The PCF includes policy control functions such as charging at a session or service flow level, QoS bandwidth assurance and mobility management, and terminal device policy decision.

The NRF may be configured to provide a network element discovery function, and provide, based on a request of another network element, network element information corresponding to a network element type. The NRF further provides a network element management service, such as network element registration, update, and deregistration, and network element status subscription and push.

The NWDAF network element is mainly configured to: collect data (including one or more of terminal device data, access network device data, core network element data, and third-party application device data), where the data may be data of the terminal device, the access network device, a core network element, or a third-party application device, or may be data of the terminal device on the access network device, a core network element, or a third-party application device; then perform data analysis based on the collected data; and output a data analytics result for use by a network, a network management device, and an application to make policy decisions.

The LMF is configured to: select a corresponding positioning method, and a corresponding communication protocol based on a positioning precision requirement, a delay requirement, and the like, to complete interaction of information needed for positioning. The LMF is further configured to provide other needed information, a positioning policy, or the like for a positioning service.

The NSSF is configured to select a network slice for the terminal device.

The AUSF is used for user authentication and the like.

The NSSAAF is configured to perform slice authentication for the terminal device.

The DN is a network located outside an operator network. The operator network may access a plurality of DNs, and a plurality of services may be deployed on the DN, to provide services such as a data service and/or a voice service for the terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, a data resource, and the like in the internal office network of the company.

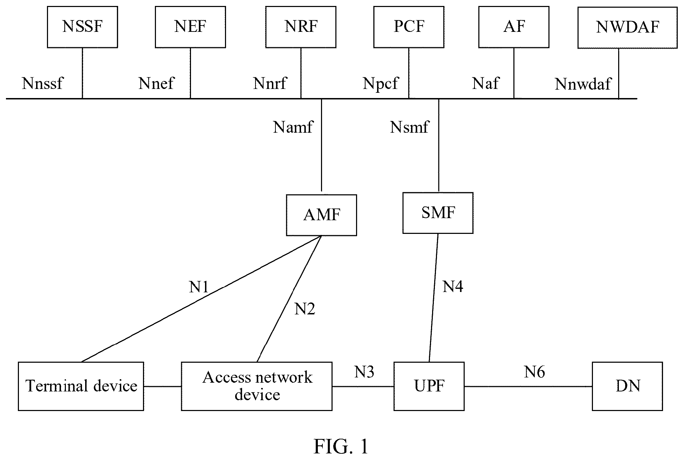

Further, the functions (such as the NWDAF, the AMF, and the SMF) in the core network device may be collectively referred to as network functions (network function, NF). The NFs in a core network may communicate with each other through service-oriented interfaces to invoke corresponding service-oriented operations. For example, a "subscription-notification" interaction mode is used between two NFs, and the two NFs are respectively represented as an NF A and an NF B. The NF A may subscribe to a service from the NF B, and the NF B may notify the NF A of the corresponding service after a corresponding condition is met. In FIG. 1, Nudr, Npcf, Namf, Nudm, Nsmf, Naf and Nnwdaf interfaces are service-oriented interfaces respectively provided by the UDR, the PCF, the AMF, the UDM, the SMF, the AF, and the NWDAF.

FIG. 1 further includes N1, N2, N3, N4, and N6 interfaces. Meanings of these interfaces are as follows:
(1) The N1 is an interface between the AMF and the terminal device, and may be configured to transfer non-access stratum (non-access stratum, NAS) signaling (for example, including a QoS rule from the AMF) to the terminal device, and the like.
(2) The N2 is an interface between the AMF and the access network device, and may be configured to transfer radio bearer control information from a core network side to the access network device, and the like.
(3) The N3 is an interface between the access network device and the UPF, and is mainly configured to transfer uplink and downlink user plane data between the access network device and the UPF.
(4) The N4 is an interface between the SMF and the UPF, and may be configured to transfer information between a control plane and a user plane, including delivery of a forwarding rule, a QoS rule, a traffic statistics rule, and the like from the control plane to the user plane, and reporting of user plane information.
(5) The N6 is an interface between the UPF and the DN, and is configured to transfer uplink and downlink user data flows between the UPF and the DN.

It may be understood that the foregoing is merely the schematic of the 5G network architecture to which this application is applicable. This application is further applicable to a future 6G network architecture. The 6G network architecture may be similar to the foregoing 5G network architecture. Names of the network elements or functions in the core network are specifically names in the 5G network architecture. The SMF is used as an example. A network element or function configured to perform session management in the 5G network architecture is referred to as the SMF. In the future 6G network architecture, the network element or function may still be the SMF network element or have another name. This is not limited in this application.

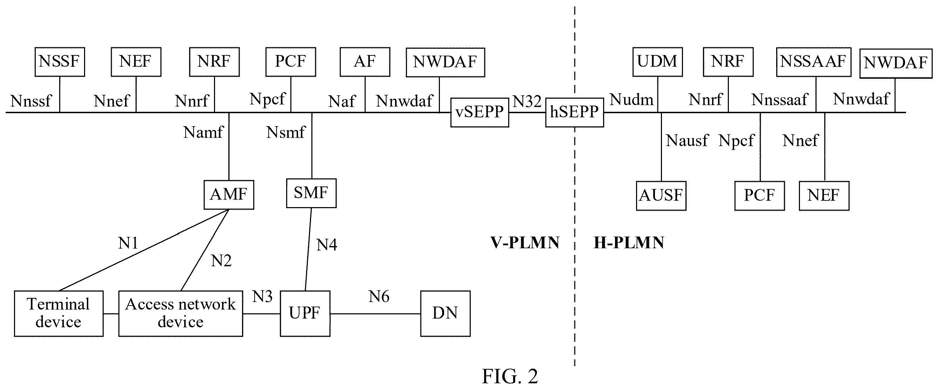

FIG. 2 is a schematic of a network architecture in a local breakout roaming scenario. In the network architecture, a terminal device roams. Therefore, the network architecture includes two areas: a V-PLMN and an H-PLMN. Specifically, the V-PLMN includes network elements such as an NSSF, a NEF, an NRF, a PCF, an AF, an AMF, an SMF, an NWDAF, and a visited security edge protection proxy (visited security edge protection proxy, vSEPP). Communication may be performed between every two of these network elements according to a service method. The H-PLMN includes network elements such as a UDM, an NRF, a PCF, an AUSF, a NEF, an NSSAAF, an NWDAF, and a home security edge protection proxy (home security edge protection proxy, hSEPP). Communication may also be performed between every two of these network elements according to the service method. The vSEPP and the hSEPP may communicate with each other through an N32 interface. During roaming, the terminal device accesses the V-PLMN, and core network elements such as the AMF and the SMF in the V-PLMN and the H-PLMN are connected to the hSEPP via the vSEPP, so that a network element in the V-PLMN can communicate with a network element in the H-PLMN.

In a roaming scenario including the H-PLMN and the V-PLMN, the H-PLMN may request information from the V-PLMN, or the V-PLMN may request information from the H-PLMN, to implement inter-PLMN information sharing. The information may be specifically roaming data (roaming data), or a roaming analytics (roaming analytics) result. In this application, a requested PLMN may be referred to as a first PLMN, and a PLMN that initiates a request may be referred to as a second PLMN. In other words, when the H-PLMN requests the information from the V-PLMN, the first PLMN is the V-PLMN, and the second PLMN is the H-PLMN, or when the V-PLMN requests the information from the H-PLMN, the first PLMN is the H-PLMN, and the second PLMN is the V-PLMN.

Further, the first PLMN may include one or more of a first NRF, a first NWDAF, and a first NF, and the second PLMN may include one or more of a second NRF, a second NWDAF, and a second NF.

In the roaming scenario, the second NWDAF in the second PLMN may request information of different granularities from the first NWDAF in the first PLMN. How to ensure security when the second NWDAF requests the information from the first NWDAF, in other words, how to improve security of the inter-PLMN information sharing, is a technical problem that needs to be urgently resolved currently.

To improve the security of the inter-PLMN information sharing, this application provides a communication method. The communication method may be specifically: After receiving a token request message from a second NWDAF, a first NRF sends a token to the second NWDAF, where the token includes indications of a plurality of pieces of information allowed to be accessed by the second NWDAF.

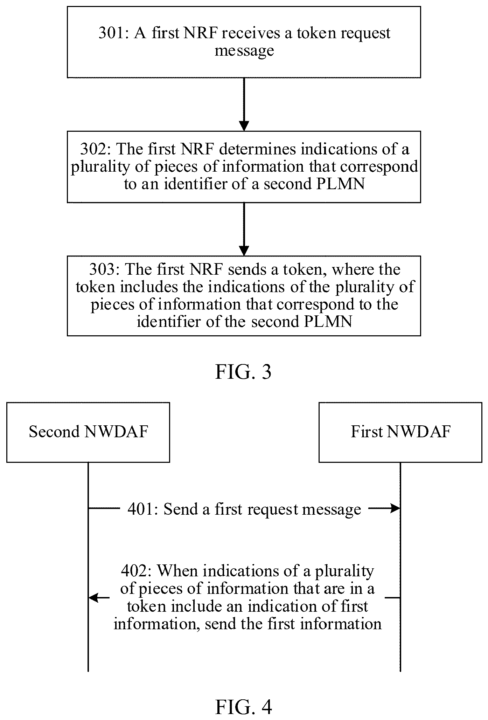

With reference to a schematic flowchart of an example of a first communication method provided in FIG. 3, the communication method is explained as follows:
Step 301: A first NRF receives a token request message.

The token request message is used to request a token. The token request message includes an identifier of a second PLMN.

Optionally, the token request message further includes a slice identifier, and the slice identifier may be specifically NSSAI. For ease of description, the slice identifier in the token request message may be denoted as a target slice identifier.

Optionally, the token request message further includes one or more of an NF provider type, an NF consumer type, and an NF service name. In an example, the token request message further includes the NF service name. In another example, the token request message further includes the NF provider type and the NF consumer type. The NF provider type may also be referred to as a target NF type (target NF type).

The token request message may be specifically generated by a second NWDAF before the second NWDAF needs to request information from a first NWDAF in an inter-PLMN manner. Further, the second NWDAF sends a token request message to the first NWDAF, in other words, the first NRF receives the token request message from the second NWDAF. In a specific implementation, after generating the token request message, the second NWDAF sends the token request message to a second NRF. Correspondingly, the second NRF receives the token request message from the second NWDAF, and forwards the token request message to the first NRF. It should be understood that the token request message sent by the second NWDAF and the token request message sent by the second NRF may be the same or may be different. However, because both the token request message sent by the second NWDAF and the token request message sent by the second NRF include the foregoing information elements, differentiation is not described in this application.

Step 302: The first NRF determines indications of a plurality of pieces of information that correspond to the identifier of the second PLMN.

In a possible manner, before determining the indications of the plurality of pieces of information that correspond to the identifier of the second PLMN, the first NRF may first determine that a function (the function of the token request message may be referred to as a function 1 for short) of the token request message is to request the token, and the requested token is used to request roaming data or request a service of a roaming analytics result in an inter-PLMN manner.

The following examples provide three implementations in which the first NRF determines that the function of the token request message is the function 1.

Implementation 1: The token request message includes the NF service name. When the NF service name indicates to request the roaming data or request the roaming analytics result, the first NRF determines that the function of the token request message is the function 1. In a specific implementation, the first NRF obtains the NF service name from the token request message; and when determining that the NF service name indicates to request the roaming data or request the roaming analytics result, determines the indications of the plurality of pieces of information that correspond to the identifier of the second PLMN. For example, when the NF service name indicates to request the roaming information, the NF service name may be specifically Nnwdaf_RoamingData; or when the NF service name indicates to request the roaming analytics result, the NF service name may be specifically Nnwdaf_RoamingAnalytics.

Implementation 2: The token request message includes the NF provider type and the NF consumer type. When both the NF provider type and the NF consumer type are an NWDAF, the first NRF determines that the function of the token request message is the function 1. Specifically, the first NRF obtains the NF provider type and the NF consumer type from the token request message; and when determining that both the NF provider type and the NF consumer type are the NWDAF, determines the indications of the plurality of pieces of information that correspond to the identifier of the second PLMN.

Implementation 3: The token request message includes the NF service name, the NF provider type, and the NF consumer type. When the NF service name indicates to request the roaming data or request the roaming analytics result, and both the NF provider type and the NF consumer type are an NWDAF, the first NRF determines that the function of the token request message is the function 1. Specifically, the first NRF obtains the NF service name, the NF provider type, and the NF consumer type from the token request message; and when determining that the NF service name indicates to request the roaming data or request the roaming analytics result, and both the NF provider type and the NF consumer type are the NWDAF, determines the indications of the plurality of pieces of information that correspond to the identifier of the second PLMN. For a specific example of the NF service name, refer to descriptions in Implementation 1.

It may also be understood that when the NF service name indicates to request the roaming data or request the roaming analytics result, and/or both the NF provider type and the NF consumer type are the NWDAF, the first NRF determines the indications of the plurality of pieces of information that correspond to the identifier of the second PLMN.

That the first NRF determines the indications of the plurality of pieces of information that correspond to the identifier of the second PLMN may be specifically: The first NRF determines, based on preconfigured information of the first NRF, the indications of the plurality of pieces of information that correspond to the identifier of the second PLMN. The preconfigured information includes a correspondence between the identifier of the second PLMN and the indications of the plurality of pieces of information, in other words, the preconfigured information includes the identifier of the second PLMN and the indications of the plurality of pieces of information that correspond to the identifier of the second PLMN.

It may also be understood that the preconfigured information further includes an identifier of another PLMN and indications of a plurality of pieces of information that correspond to the identifier of the another PLMN. In a possible manner, the preconfigured information of the first NRF includes identifiers of M PLMNs and indications of a plurality of pieces of information that correspond to an identifier of each of the M PLMNs, the identifiers of the M PLMNs include the identifier of the second PLMN, and M is a positive integer.

For an identifier of any PLMN, information indicated by indications of a plurality of pieces of information that correspond to the identifier of the PLMN is allowed to be accessed by the PLMN (or an NWDAF in the PLMN). For example, if an identifier of a PLMN is a PLMN 1, and the preconfigured information includes a correspondence between the PLMN 1 and indications of a plurality of pieces of information 1, the indications of the plurality of pieces of information 1 indicate the plurality of pieces of information 1, and the plurality of pieces of information 1 are allowed to be accessed by the PLMN whose identifier is the PLMN 1. Specifically, the plurality of pieces of information 1 are allowed to be accessed by an NWDAF in the PLMN whose identifier is the PLMN 1.

Further, in the identifiers of the M PLMNs, quantities of indications of information corresponding to identifiers of any two PLMNs are the same or different. For example, the identifiers of the M PLMNs include the PLMN 1, a PLMN 2, and a PLMN 3. The PLMN 1 corresponds to indications of two pieces of information, the PLMN 2 corresponds to indications of three pieces of information, and the PLMN 3 corresponds to indications of two pieces of information, in other words, quantities of indications of information corresponding to the PLMN 1 and the PLMN 3 are the same, and quantities of indications of information corresponding to the PLMN 2 and the PLMN 1 (or the PLMN 3) are different.

Based on that the information is roaming data or an analytics result, the preconfigured information of the first NRF is described in the following two cases.

When the information is the roaming data, an indication of the roaming data includes at least one or more of the following: a data specification (data specification), an event identifier (event ID), event filter information (event filter information), target of event reporting (target of event reporting), and a bulked data type parameter (bulked data type parameter).

The data specification may include one or more of the target of event reporting, the event filter information, and the bulked data type parameter.

The event identifier identifies a type of a to-be-registered event, for example, protocol data unit (protocol data unit, PDU) session release, or leaving of a terminal device from an area of interest. Based on different event identifiers, an NF provider can determine a piece of data or pieces of data that the NF provider needs to collect.

The event filter information provides a parameter type and an event parameter value that are of a to-be-matched event, so that the NF provider provides an NF consumer with a condition that meets subscribed event filter information.

The target of event reporting indicates a target of an event. The target of the event may be a terminal device, a PDU session, a group of terminal devices, or any terminal device.

The bulked data type parameter indicates data extracted from data collected from the event, and/or indicates data obtained by processing data collected from the event.

For example, the indication of the roaming data includes one field. For example, the field is the data specification (or it is considered that the indication of the roaming data is the data specification). Correspondences in the preconfigured information of the first NRF are shown in Table 1. Indications of two pieces of roaming data that correspond to the PLMN 1 are respectively a data specification 1 and a data specification 3, and indications of three pieces of roaming data that correspond to the PLMN 2 are respectively the data specification 1, a data specification 2, and the data specification 3.

**Table 1**

| Identifier of the PLMN | Indications of a plurality of pieces of roaming data |
|---|---|
| PLMN 1 | Data specification 1 and data specification 3 |
| PLMN 2 | Data specification 1, data specification 2, and data specification 3 |

Further, the indication of the roaming data may alternatively include another field. Specifically, the field is the event identifier (or it is considered that the indication of the roaming data is the event identifier), the field is the event filter information (or it is considered that the indication of the roaming data is the event filter information), the field is the target of event reporting (or it is considered that the indication of the roaming data is the target of event reporting), the field is the bulked data type parameter (or it is considered that the indication of the roaming data is the bulked data type parameter), or the like. For specific implementation, refer to the foregoing descriptions that the indication of the roaming data is the data specification (that is, the embodiment related to Table 1).

For another example, the indication of the roaming data includes two fields. For example, the two fields are the data specification and the event identifier (or it is considered that the indication of the roaming data is a combination of the data specification and the event identifier). Correspondences in the preconfigured information of the first NRF are shown in Table 2. Indications of two pieces of roaming data that correspond to the PLMN 1 are respectively a data specification 1 + an event identifier 1, and a data specification 3 + an event identifier 3, and indications of two pieces of roaming data that correspond to the PLMN 2 are respectively a data specification 2 + an event identifier 2, and the data specification 3 + the event identifier 2.

**Table 2**

| Identifier of the PLMN | Indications of a plurality of pieces of roaming data |
|---|---|
| PLMN 1 | Data specification 1 + event identifier 1, and data specification 3 + event identifier 3 |
| PLMN 2 | Data specification 2 + event identifier 2, and data specification 3 + event identifier 2 |

Further, the indication of the roaming data may alternatively include a combination of another two fields. For example, the two fields are the event identifier and the event filter information (or it is considered that the indication of the roaming data is a combination of the event identifier and the event filter information), the two fields are the data specification and the event filter information (or it is considered that the indication of the roaming data is a combination of the data specification and the event filter information), or the two fields are the target of event reporting and the event filter information (or it is considered that the indication of the roaming data is a combination of the target of event reporting and the event filter information). For specific implementation, refer to the foregoing descriptions that the indication of the roaming data is the combination of the data specification and the event identifier (that is, the embodiment related to Table 2).

In addition, the indication of the roaming data may further include a combination of a plurality of fields, for example, a combination of three fields, a combination of four fields, or a combination of five fields. For specific implementation, refer to the foregoing descriptions that the indication of the roaming data is one field, or the indication of the roaming data is a combination of two fields.

In this application, it may be considered that when the indication of the roaming data includes a combination of the data specification and another field, the data specification does not include the field. For example, when the indication of the roaming data includes the data specification and the event filter information, the data specification may include one or more of the target of event reporting and the bulked data type parameter.

It should be added that, in Table 1 or Table 2, indications of roaming data that correspond to identifiers of different PLMNs that are included in the preconfigured information have a same field. In addition, the indications of the roaming data that correspond to the identifiers of the different PLMNs that are included in the preconfigured information may alternatively have different fields. For example, correspondences in the preconfigured information of the first NRF are shown in Table 3. Indications of two pieces of roaming data that correspond to the PLMN 1 are respectively an event identifier 1 and an event identifier 3, and indications of three pieces of roaming data that correspond to the PLMN 2 are respectively event filter information 1, event filter information 2, and event filter information 3.

**Table 3**

| Identifier of the PLMN | Indications of a plurality of pieces of roaming data |
|---|---|
| PLMN 1 | Event identifier 1 and event identifier 3 |
| PLMN 2 | Event filter information 1, event filter information 2, and event filter information 3 |

When the information is the roaming analytics result, an indication of the roaming analytics result includes at least one or more of the following: an analytics specification (analytics specification), an analytics identifier (analytics ID), an event identifier (event ID), and target of analytics reporting (target of analytics reporting).

The analytics specification may include one or more of the analytics identifier, the target of analytics reporting, and another parameter for obtaining the roaming analytics result.

The event identifier identifies a type of a to-be-registered event, for example, PDU session release, or leaving of a terminal device from an area of interest. An NF provider can determine corresponding analytics based on different event identifiers.

The analytics identifier identifies analytics of a request.

The target of analytics reporting indicates an analyzed target, where the analyzed target may be a terminal device, a group of terminal devices, or any terminal device.

For example, the indication of the roaming analytics result includes one field. For example, the field is the analytics specification (or it is considered that the indication of the roaming analytics result is the analytics specification), the field is the analytics identifier (or it is considered that the indication of the roaming analytics result is the analytics identifier), the field is the event identifier (or it is considered that the indication of the roaming analytics result is the event identifier), or the field is the target of analytics reporting (or it is considered that the indication of the roaming analytics result is the target of analytics reporting). For specific implementation, refer to the foregoing descriptions that the indication of the roaming data includes one field. For another example, the indication of the roaming analytics result includes a plurality of fields (or it is considered that the indication of the roaming analytics result is a combination of a plurality of fields). The plurality of fields are, for example, the analytics specification and the analytics identifier, the analytics identifier and the event identifier, the analytics specification and the event identifier, or the analytics specification, the analytics identifier, and the event identifier. For specific implementation, refer to the foregoing descriptions that the indication of the roaming data includes a plurality of fields (that is, the embodiments related to Table 1 to Table 3).

Further, that the first NRF determines, based on the preconfigured information of the first NRF, the indications of the plurality of pieces of information that correspond to the identifier of the second PLMN may be specifically: The first NRF determines, from the preconfigured information of the first NRF based on the identifier of the second PLMN, the indications of the plurality of pieces of information that correspond to the identifier of the second PLMN. The indications of the plurality of pieces of information that correspond to the identifier of the second PLMN indicate the plurality of pieces of information (that is, a plurality of pieces of roaming data or a plurality of roaming analytics results), and the plurality of pieces of information are allowed to be accessed by the second PLMN. Specifically, the plurality of pieces of information may be allowed to be accessed by the second NWDAF in the second PLMN. With reference to an example of the preconfigured information shown in the foregoing Table 1, for example, the identifier of the second PLMN is the PLMN 1. The first NRF may determine the data specification 1 and the data specification 3 based on the preconfigured information and the PLMN 1. Further, roaming data indicated by the data specification 1 and the data specification 3 is allowed to be accessed by the second PLMN (or the second NWDAF in the second PLMN).

It should be noted that the preconfigured information of the first NRF may further include a correspondence with a finer granularity. In a possible implementation, the preconfigured information includes a correspondence between the identifier of the second PLMN, the target slice identifier, and the indications of the plurality of pieces of information. Correspondingly, the first NRF may determine, based on the preconfigured information of the first NRF, the indications of the plurality of pieces of information that correspond to the identifier of the second PLMN and the target slice identifier.

It may also be understood that the preconfigured information further includes an identifier of another PLMN and another slice identifier, and indications of a plurality of pieces of information that correspond to the identifier of the another PLMN and the another slice identifier. For example, the preconfigured information includes M combinations and indications of a plurality of pieces of information that correspond to each combination, each combination includes an identifier of a PLMN and a slice identifier, the M combinations include a combination of the identifier of the second PLMN and the target slice, and M is a positive integer.

For any combination of the identifier of the PLMN and the slice identifier, the indications of the plurality of pieces of information that correspond to the identifier of the PLMN and the slice identifier indicate the plurality of pieces of information, and the plurality of pieces of information are allowed to be accessed by an NF (for example, an NWDAF) in a slice corresponding to the slice identifier in the PLMN. For example, if an identifier of a PLMN is the PLMN 1, and the preconfigured information includes a combination of the PLMN 1 and a slice identifier 1, and indications of a plurality of pieces of information 1 corresponding to the combination, the indications of the plurality of pieces of information 1 indicate the plurality of pieces of information 1, and the plurality of pieces of information 1 are allowed to be accessed by an NWDAF in a slice corresponding to the slice identifier 1 in the PLMN.

When the information is roaming data, an indication of the roaming data includes one field, and the field is the data specification (or it is considered that the indication of the roaming data is the data specification). Correspondences in the preconfigured information of the first NRF are shown in Table 4. Indications of two pieces of roaming data that correspond to the combination of the PLMN 1 and the slice identifier 1 (represented as the PLMN 1 + the slice identifier 1 in the preconfigured information) are respectively a data specification 1 and a data specification 3, indications of two pieces of roaming data that correspond to a combination of the PLMN 1 and a slice identifier 2 are respectively the data specification 1 and a data specification 2, indications of two pieces of roaming data that correspond to a combination of the PLMN 2 and the slice identifier 1 are respectively the data specification 2 and the data specification 3, and indications of three pieces of roaming data that correspond to a combination of the PLMN 2 and the slice identifier 2 are respectively the data specification 1, the data specification 2, and the data specification 3.

**Table 4**

| Identifier of the PLMN + slice identifier | Indications of a plurality of pieces of roaming data |
|---|---|
| PLMN 1 + slice identifier 1 | Data specification 1 and data specification 3 |
| PLMN 1 + slice identifier 2 | Data specification 1 and data specification 2 |
| PLMN 2 + slice identifier 1 | Data specification 2 and data specification 3 |
| PLMN 2 + slice identifier 2 | Data specification 1, data specification 2, and data specification 3 |

When the information is roaming data and an indication of the roaming data includes another one field, when the information is roaming data and an indication of the roaming data includes a plurality of fields, when the information is a roaming analytics result and an indication of the roaming analytics result includes one field, or when the information is a roaming analytics result and an indication of the roaming analytics result includes a plurality of fields, for specific implementation, refer to the foregoing descriptions that the preconfigured information includes the identifier of the PLMN (that is, the embodiments related to Table 1 to Table 3), and the foregoing descriptions that the preconfigured information includes the combination of the identifier of the PLMN and the slice identifier, and the indication of the roaming data that corresponds to the combination, and the indication of the roaming data includes one field (that is, the embodiment related to Table 4).

Correspondingly, that the first NRF determines, based on the preconfigured information of the first NRF, the indications of the plurality of pieces of information that correspond to the identifier of the second PLMN and the target slice identifier may be specifically: The first NRF determines, from the preconfigured information of the first NRF based on the identifier of the second PLMN and the target slice identifier, the indications of the plurality of pieces of information that correspond to the identifier of the second PLMN and the target slice identifier. The plurality of pieces of information indicated by the determined indications of the plurality of pieces of information are allowed to be accessed by an NF (for example, the second NWDAF) in a slice corresponding to the slice identifier in the second PLMN. With reference to an example of the preconfigured information shown in Table 4, for example, the identifier that is of the second PLMN and that is included in the token request message is the PLMN 1, and the target slice identifier is the slice identifier 1. The first NRF may determine the data specification 1 and the data specification 3 based on the preconfigured information, the PLMN 1, and the slice identifier 1. Further, roaming data indicated by the data specification 1 and the data specification 3 is allowed to be accessed by the second NWDAF in a slice corresponding to the slice identifier 1 in the second PLMN.

It should be further added that Table 1 to Table 4 are merely examples for description, and do not constitute a limitation on the preconfigured information of the first NRF in this application.

Step 303: The first NRF sends the token.

Specifically, after generating (or issuing) the token, the first NRF sends the token to the second NRF. The second NRF receives the token from the first NRF, and forwards the token to the second NWDAF. Correspondingly, the second NWDAF receives the token from the second NRF, and the token is used by the second NWDAF to request information from the first NWDAF.

For example, the token may be carried in a token response message. In other words, the first NRF sends the token response message to the second NRF, and the second NRF receives the token response message from the first NRF, and forwards the token response message to the second NWDAF. It should be understood that the token response message sent by the first NRF and the token response message sent by the second NRF may be the same or may be different. However, because both the token response message sent by the first NRF and the token response message sent by the second NRF include the foregoing token, differentiation may not be described in this application.

In a possible manner, the token includes the indications of the plurality of pieces of information that correspond to the identifier of the second PLMN. With reference to the example related to Table 1, the first NRF may generate the token after determining, based on the preconfigured information and the PLMN 1, the data specification 1 and the data specification 3 that correspond to the PLMN 1. The token includes the data specification 1 and the data specification 3 that correspond to the PLMN 1. Alternatively, with reference to the example related to Table 4, the first NRF may generate the token after determining, based on the combination of the PLMN 1 and the slice identifier 1, and the preconfigured information, the data specification 1 and the data specification 3 that correspond to the combination of the PLMN 1 and the slice identifier 1. The token includes the data specification 1 and the data specification 3 that correspond to the PLMN 1 and the slice identifier 1.

Optionally, the token further includes a declaration. The declaration may include one or more of the following: an identifier of the first NRF, an identifier of the second NWDAF, the NF service name, the NF provider type, the NF consumer type, an NF provider identifier, an NF consumer identifier, an identifier of a home PLMN, an identifier of a serving PLMN, and the slice identifier.

Optionally, the token further includes a signature, and the signature is specifically a digital signature of the first NRF for the declaration part in the token.

In addition, when the token request message includes the identifier of the second PLMN but the preconfigured information of the first NRF does not include the identifier of the second PLMN, or when the token request message includes a combination of the identifier of the second PLMN and the target slice identifier but the preconfigured information of the first NRF does not include the combination, the first NRF may send a first rejection message, and the first rejection message is used to reject the token request message. Specifically, the first NRF sends the first rejection message to the second NRF, and the second NRF receives the first rejection message from the first NRF, and forwards the first rejection message to the second NWDAF. With reference to the example in Table 1, for example, the identifier of the second PLMN in the token request message is the PLMN 3. The first NRF determines that the preconfigured information does not include the PLMN 3, and then sends the first rejection message to the second NRF. The second NRF forwards the first rejection message to the second NWDAF. Then, with reference to the example in Table 4, for example, the identifier of the second PLMN in the token request message is the PLMN 1, and the target slice identifier is the slice identifier 3. The first NRF determines that the preconfigured information does not include a combination of the PLMN 1 and the slice identifier 3, and then sends the first rejection message to the second NRF. The second NRF forwards the first rejection message to the second NWDAF.

In the foregoing technical solution, when generating the token for the second NWDAF, the first NRF includes, in the token, the indications of the plurality of pieces of information that correspond to the identifier of the second PLMN. The plurality of pieces of information indicate information that the second PLMN is allowed to access. This helps improve security of inter-PLMN information sharing. Further, in comparison with a solution in which a local policy is configured in an NWDAF in a first PLMN to perform authentication on access of the second NWDAF, in this application, the local policy does not need to be configured in the NWDAF in the first PLMN. This helps reduce configuration complexity.

In addition, when sending the token request message, the second NWDAF does not need to include, in the token request message, an indication of information requested by the second NWDAF. This helps reduce communication load. In addition, the token generated by the first NRF is at a PLMN (or a PLMN + a slice identifier) granularity, and the second NWDAF may request, from the first NWDAF based on the token, a plurality of pieces of different information corresponding to the PLMN (or the PLMN + the slice identifier). In comparison with a solution in which the second NWDAF requests a token (that is, the token is at an information granularity) for an indication of each piece of information, in this application, a token for an indication of information does not need to be first requested each time the information is requested from the first NWDAF. This reduces authentication complexity and communication overheads.

To improve security of inter-PLMN information sharing, this application further provides a communication method. A procedure in the communication method may be specifically: A second NWDAF requests information from a first NWDAF based on a token, and the first NWDAF sends the information to the second NWDAF based on the token.

With reference to a schematic flowchart of an example of a second communication method provided in FIG. 4, the communication method is explained as follows:

Step 401: A second NWDAF sends a first request message to a first NWDAF. Correspondingly, the first NWDAF receives the first request message from the second NWDAF.

The first request message includes a token and an indication of first information requested by the second NWDAF. There may be one or more indications of the first information. The token may be specifically obtained by the second NWDAF from a first NRF. In other words, in the embodiment related to FIG. 3, the token is generated by the first NRF and forwarded by a second NRF to the second NWDAF. For descriptions of the token, refer to the descriptions in the embodiment related to FIG. 3. The first information is information to be requested by the second NWDAF, in other words, information that the second NWDAF needs to request from the first NWDAF. The first information may be roaming data, or may be a roaming analytics result.

When the first information is the roaming data, the indication of the first information is an indication of roaming data (requested data) that the second NWDAF needs to request. For example, when the second NWDAF needs to request roaming data indicated by a data specification 1, an indication included in the first request message sent by the second NWDAF to the first NWDAF is the data specification 1. When the second NWDAF needs to request roaming data indicated by a data specification 1 and roaming data indicated by a data specification 3, two indications included in the first request message sent by the second NWDAF to the first NWDAF are respectively the data specification 1 and the data specification 3. When the second NWDAF needs to request roaming data indicated by an event identifier 1, an indication included in the first request message sent by the second NWDAF to the first NWDAF is the event identifier 1. When the second NWDAF needs to request roaming data indicated by a data specification 1 + an event identifier 1, an indication included in the first request message sent by the second NWDAF to the first NWDAF is the data specification 1 + the event identifier 1.

When the first information is the roaming analytics result, the indication of the first information is an indication of a roaming analytics (requested analytics) result that the second NWDAF needs to request. For example, when the second NWDAF needs to request a roaming analytics result indicated by an analytics specification 1, an indication included in the first request message sent by the second NWDAF to the first NWDAF is the analytics specification 1. When the second NWDAF needs to request a roaming analytics result indicated by an analytics specification 1 and a roaming analytics result indicated by an analytics specification 3, two indications included in the first request message sent by the second NWDAF to the first NWDAF are the analytics specification 1 and the analytics specification 3. When the second NWDAF needs to request a roaming analytics result indicated by an analytics identifier 1, an indication included in the first request message sent by the second NWDAF to the first NWDAF is the analytics identifier 1. When the second NWDAF needs to request a roaming analytics result indicated by an analytics specification 1 + an analytics identifier 1, an indication included in the first request message sent by the second NWDAF to the first NWDAF is the analytics specification 1 + the analytics identifier 1.

Further, when the first information is the roaming analytics result, the second NWDAF may send the first request message to the first NWDAF based on triggering of a second NF. In a specific implementation, the second NF sends, to the second NWDAF, an indication of a roaming analytics result requested by the second NF. Correspondingly, the second NWDAF receives, from the second NF, the indication of the roaming analytics result requested by the second NF, and sends the first request message to the first NWDAF. The first request message includes the indication (that is, the indication of the roaming analytics result requested by the second NWDAF) of the roaming analytics result requested by the second NF.

In another example, the second NWDAF may further send the token and the indication of the first information in a plurality of messages to the first NWDAF. For example, the second NWDAF first sends a message including the token to the first NWDAF, and then sends another message including the indication of the first information to the first NWDAF. For example, if the second NWDAF needs to request, from the first NWDAF, the roaming data respectively indicated by the data specification 1 and the data specification 3, the second NWDAF may first send a message 1 including the token to the first NWDAF, and then send a message 2 including the data specification 1 and the data specification 3 to the first NWDAF. For another example, the second NWDAF first sends a message including the token to the first NWDAF, and then sends a message that corresponds to each indication and that respectively includes each of indications of a plurality of pieces of first information to the first NWDAF. For example, if the second NWDAF needs to request, from the first NWDAF, the roaming data respectively indicated by the data specification 1 and the data specification 3, the second NWDAF may first send a message 1 including the token to the first NWDAF, and then send a message 2 including the data specification 1 to the first NWDAF, and send a message 3 including the data specification 3 to the first NWDAF. A specific implementation in which the second NWDAF sends the token and the indication of the first information to the first NWDAF is not limited in this application.

Step 402: When indications of a plurality of pieces of information that are in the token include the indication of the first information, the first NWDAF sends the first information to the second NWDAF. Correspondingly, the second NWDAF receives the first information from the first NWDAF.

Specifically, the first NWDAF obtains the indications of the plurality of pieces of information from the token. The plurality of pieces of information are information allowed to be accessed by the second NWDAF (or the second NWDAF is authorized to access the plurality of pieces of information). Then, when determining that the indications of the plurality of pieces of information that are in the token include the indication of the first information, in other words, when determining that the second NWDAF is authorized (allowed) to access the first information requested by the second NWDAF, the first NWDAF sends the first information to the second NWDAF. Alternatively, it may be further understood that when determining that the indications of the plurality of pieces of information that are in the token include the indication of the first information, the first NWDAF sends the first information to the second NWDAF.

When the first information is the roaming data, if the first NWDAF determines that indications of a plurality of pieces of roaming data in the token include the indication (that is, the indication of the first information) of the roaming data requested by the second NWDAF, the first NWDAF determines that the second NWDAF is authorized to access the roaming data requested by the second NWDAF. For example, if the token includes the data specification 1 and the data specification 3 that correspond to an identifier of a second PLMN, and the first request message includes the data specification 1, the first NWDAF determines that the second NWDAF is authorized to access the roaming data indicated by the data specification 1. Further, after determining that the second NWDAF is authorized to access the roaming data requested by the second NWDAF, the first NWDAF may request the roaming data from a first NF based on the indication of the roaming data that the second NWDAF needs to request. Specifically, the first NWDAF sends, to the first NF, the indication of the roaming data that the second NWDAF needs to request. Correspondingly, after receiving, from the first NWDAF, the indication of the roaming data that the second NWDAF needs to request, the first NF sends, to the first NWDAF, the roaming data that the second NWDAF needs to request. Then, the first NWDAF sends, to the second NWDAF, the roaming data that the second NWDAF needs to request. With reference to the foregoing example, the first NWDAF sends the data specification 1 to the first NF. Correspondingly, after receiving the data specification 1 from the first NWDAF, the first NF sends, to the first NWDAF, the roaming data indicated by the data specification 1. Then, the first NWDAF sends, to the second NWDAF, the roaming data indicated by the data specification 1.

When the first information is the roaming analytics result, if the first NWDAF determines that indications of a plurality of roaming analytics results in the token include the indication (that is, the indication of the first information) of the roaming analytics result requested by the second NWDAF, the first NWDAF determines that the second NWDAF is authorized to access the roaming analytics result requested by the second NWDAF. For example, if the token includes the analytics specification 1 and the analytics specification 3 that correspond to an identifier of a second PLMN, and the first request message includes the analytics specification 1, the first NWDAF determines that the second NWDAF is authorized to access the roaming analytics result indicated by the analytics specification 1. Further, after determining that the second NWDAF is authorized to access the roaming analytics result requested by the second NWDAF, the first NWDAF may determine, from a local roaming analytics result of the first NWDAF based on the indication of the roaming analytics result that the second NWDAF needs to request, a roaming analytics result (that is, the roaming analytics result that the second NWDAF needs to request) indicated by a roaming analytics specification, and send, to the second NWDAF, the roaming analytics result that the second NWDAF needs to request. With reference to the foregoing example, the first NWDAF determines, from the local roaming analytics result of the first NWDAF based on the analytics specification 1, the roaming analytics result indicated by the roaming analytics specification 1, and sends, to the second NWDAF, the roaming analytics result indicated by the roaming analytics specification 1. Further, the second NWDAF forwards, to the second NF, the received roaming analytics result indicated by the roaming analytics specification.

For example, the first NWDAF may send the first information to the second NWDAF by using a first response message corresponding to the first request message. In other words, the first response message includes the first information. Certainly, the first NWDAF may alternatively send the first information by using a message other than the first response message. A message type is not limited in this application.

Optionally, before the first NWDAF determines that the indications of the plurality of pieces of information that are in the token include the indication of the first information, the first NWDAF may first verify the token. Further, after determining that the token passes verification, the first NWDAF determines that the indications of the plurality of pieces of information that are in the token include the indication of the first information. It may be understood that after determining that the token does not pass the verification, the first NWDAF sends a second rejection message to the second NWDAF.

In a possible manner, the first NWDAF may sequentially perform an integrity check and a declaration verification on the token. For example, after determining that the token passes the integrity check, the first NWDAF performs the declaration verification on the token. Further, after determining that the token passes the integrity check and the declaration verification, the first NWDAF determines that the token passes the verification; or after determining that the token does not pass the integrity check or the token does not pass the declaration verification, the first NWDAF determines that the token does not pass the verification.

Integrity check: The first NWDAF verifies a signature in the token. Specifically, the first NWDAF may verify the signature in the token based on a preconfigured credential (for example, a certificate or a symmetric key).

Declaration verification: The first NWDAF determines whether a field is consistent in a declaration and the first request message. For example, the first NWDAF verifies whether an identifier of an NF consumer in the declaration is consistent with an identifier of an NF consumer in the first request message; the first NWDAF verifies whether an identifier of a serving PLMN in the declaration is consistent with an identifier of a serving PLMN in the first request message; the first NWDAF verifies whether the first NWDAF belongs to an NF provider type in the declaration; the first NWDAF verifies whether the first NWDAF belongs to a first PLMN in the declaration; the first NWDAF verifies whether a service currently invoked by the first NWDAF is consistent with an NF service name in the declaration; or the first NWDAF verifies whether an identifier of a slice at which the first NWDAF is located belongs to a slice identifier in the declaration.

It may be understood that the second NWDAF may send a plurality of request messages to the first NWDAF, and the plurality of request messages are used to request information corresponding to the plurality of request messages. For example, the second NWDAF may further send a second request message to the first NWDAF. The second request message includes an indication of second information and the token, and there may be one or more indications of the second information. The second request message is used to request the second information. Correspondingly, when determining that the indications of the plurality of pieces of information that are in the token include the indication of the second information, the first NWDAF sends the second information to the second NWDAF. Optionally, the first NWDAF may send the second information to the second NWDAF by using a second response message. For details, refer to the descriptions in step 401 and step 402. The "first information" may be replaced with the "second information" for understanding.

In this application, the first information is different from the second information.

In a possible implementation, that the first information is different from the second information may be specifically: A field in the indication of the first information is not completely the same as a field in the indication of the second information. For example, when the first information and the second information are roaming data, the indication of the first information is the data specification 1, and the indication of the second information is an event identifier 2; or when the first information and the second information are roaming analytics results, the indication of the first information is the analytics specification 1, and the indication of the second information is an event identifier 2.

In another possible implementation, that the first information is different from the second information may be specifically: When a field in the indication of the first information is completely the same as a field in the indication of the second information, values corresponding to a same field in the indication of the first information and the indication of the second information are different. When the first information and the second information are roaming data, for example, the indication of the first information is the data specification 1, and the indication of the second information is a data specification 2. For another example, the indication of the first information is the data specification 1 + the event identifier 1, and the indication of the second information is the data specification 1 + an event identifier 2. When the first information and the second information are roaming analytics results, the indication of the first information is the analytics specification 1, and the indication of the second information is an analytics specification 2. For another example, the indication of the first information is the analytics specification 1 + the event identifier 1, and the indication of the second information is the analytics specification 1 + an event identifier 2.

For example, the second NWDAF may further send a third request message to the first NWDAF. The third request message includes an indication of third information and the token, and there may be one or more indications of the third information. In other words, the second request message is used to request the second information. Correspondingly, when determining, based on the token and the indication of the third information, that the indications of the plurality of pieces of information that are in the token do not include the indication of the third information, in other words, after the first NWDAF determines that the second NWDAF is not authorized to access the third information requested by the second NWDAF, the first NWDAF may send the second rejection message to the second NWDAF, where the second rejection message is used to reject the third request message. For example, when the information is roaming data, if the token includes the data specification 1 and the data specification 3 that correspond to the identifier of the second PLMN, and the third request message includes the data specification 2, the first NWDAF determines that the second NWDAF is not authorized to access roaming data indicated by the data specification 2, and sends the second rejection message to the second NWDAF. When the information is roaming data, if the token includes the data specification 1 and the data specification 3 that correspond to the identifier of the second PLMN, and the third request message includes the data specification 2 and a data specification 4, the first NWDAF determines that the second NWDAF is not authorized to access roaming data indicated by the data specification 2 and the data specification 4, and sends the second rejection message to the second NWDAF. When the information is a roaming analytics result, if the token includes the analytics specification 1 and the analytics specification 3 that correspond to the identifier of the second PLMN, and the third request message includes the analytics specification 2, the first NWDAF determines that the second NWDAF is not authorized to access a roaming analytics result indicated by the analytics specification 2, and sends the second rejection message to the second NWDAF.

It may be understood that the indications that are included in the token and that are of the plurality of pieces of information that correspond to the identifier of the second PLMN indicate a plurality of pieces of information that are allowed to be accessed by the second PLMN. Specifically, the indications that are included in the token and that are of the plurality of pieces of information that correspond to the identifier of the second PLMN include the indication of the first information and the indication of the second information. The first information is information requested by using the first request message, the second information is information requested by using the second request message, the first information is different from the second information, the first request message and the second request message are different request messages, and both the first request message and the second request message are from the second NWDAF in the second PLMN. For example, the identifier of the second PLMN is a PLMN 1, and indications of two pieces of roaming data that correspond to the PLMN 1 are respectively the data specification 1 and the data specification 3. Further, the first information is specifically the roaming data indicated by the data specification 1, the second information is specifically the roaming data indicated by the data specification 3, the roaming data indicated by the data specification 1 is requested by using the first request message, and the roaming data indicated by the data specification 3 is requested by using the second request message.

In other words, the indications that are included in the token and that are of the plurality of pieces of information that correspond to the identifier of the second PLMN are used to determine that the first information requested by using the first request message and the second information requested by using the second request message are allowed to be accessed by the second PLMN, and the first request message and the second request message are from the second NWDAF in the second PLMN. For example, the identifier of the second PLMN is the PLMN 1, and the indications of the two pieces of roaming data that correspond to the PLMN 1 are respectively the data specification 1 and the data specification 3. Further, the first request message includes the data specification 1, the first information requested by using the first request message is the roaming data indicated by the data specification 1, and the first NWDAF may determine that the first information is allowed to be accessed by the second PLMN, and then send the first information to the second NWDAF. The second request message includes the data specification 3, the second information requested by using the second request message is the roaming data indicated by the data specification 3, and the first NWDAF may determine that the second information is allowed to be accessed by the second PLMN, and then send the second information to the second NWDAF. In addition, the indications that are included in the token and that are of the plurality of pieces of information that correspond to the identifier of the second PLMN may be further used to determine that the third information requested by using the third request message is not allowed to be accessed by the second PLMN. With reference to the foregoing examples, the third request message includes the data specification 2, the third information requested by using the third request message is the roaming data indicated by the data specification 2, and the first NWDAF may determine that the third information is not allowed to be accessed by the second PLMN, and send the second rejection message to the second NWDAF.

Alternatively, it may be understood that the indications that are included in the token and that are of the plurality of pieces of information that correspond to the identifier of the second PLMN may be used by the first NWDAF to verify the first request message and the second request message. The first request message is a request message that is from the second NWDAF and that is used to request the first information, the second request message is a request message that is from the second NWDAF and that is used to request the second information, and the first information is different from the second information. For example, the identifier of the second PLMN is the PLMN 1, and the indications of the two pieces of roaming data that correspond to the PLMN 1 are respectively the data specification 1 and the data specification 3. Further, the first information requested by using the first request message is specifically the roaming data indicated by the data specification 1. The first NWDAF determines that the first request message passes verification, and sends the first information to the second NWDAF. The second information requested by using the second request message is specifically the roaming data indicated by the data specification 3. The first NWDAF determines that the second request message passes verification, and sends the second information to the second NWDAF. In addition, the indications that are included in the token and that are of the plurality of pieces of information that correspond to the identifier of the second PLMN may be further used by the first NWDAF to verify the third request message. The first NWDAF determines that the third request message does not pass verification, and sends the second rejection message to the second NWDAF. With reference to the foregoing examples, the third information is specifically the roaming data indicated by the data specification 2, and the first NWDAF determines that the third request message does not pass the verification, and sends the second rejection message to the second NWDAF.

It should be added that the first request message may include the indication of the first information, and also include the indication of the third information. Correspondingly, after receiving the first request message, the first NWDAF may determine that the first information is allowed to be accessed by the second NWDAF in the second PLMN, and the third information is not allowed to be accessed by the second NWDAF in the second PLMN. In this way, the first NWDAF may send the first information to the second NWDAF. Optionally, the first NWDAF further sends a rejection indication to the second NWDAF, where the rejection indication includes the indication of the third information, to indicate the second NWDAF to reject access of the first NWDAF to the third information. Optionally, the first information and the rejection indication may be included in the first response message. Similarly, the second request message may include the indication of the second information, and also include the indication of the third information. After receiving the second request message, the first NWDAF sends the second information to the second NWDAF. Optionally, the first NWDAF further sends the rejection indication to the second NWDAF.

In another possible implementation, after obtaining the token, the second NWDAF may determine, based on the token and the information that the second NWDAF needs to request, whether to request the information from the first NWDAF, and/or pieces of information that are requested from the first NWDAF.

Specifically, the second NWDAF determines, based on the indications that are in the token and that are of the plurality of pieces of information that correspond to the identifier of the second PLMN and an indication (that is, an indication of to-be-requested information) of the information that the second NWDAF needs to request, the information to be requested from the first NWDAF. In other words, the second NWDAF selects, from the information that needs to be requested, information that is allowed to be accessed by the second NWDAF (which may also be referred to as being allowed to be accessed by the second PLMN in this application) as the information to be requested from the first NWDAF (in other words, the second NWDAF determines indications of pieces of information carried in the first request message sent to the first NWDAF).

Therefore, in step 401, that the second NWDAF sends the first request message to the first NWDAF may be specifically: When the indications that are in the token and that are of the plurality of pieces of information that correspond to the identifier of the second PLMN include the indication of the first information, the second NWDAF sends the first request message. In other words, before sending the first request message, the second NWDAF determines that the indications that are in the token and that are of the plurality of pieces of information that correspond to the identifier of the second PLMN include the indication of the first information, that is, determines that the second NWDAF is allowed to access the first information. In this way, the information requested by the second NWDAF from the first NWDAF is information that the second NWDAF is allowed to access. This helps improve a success rate of requesting information by the second NWDAF.

Alternatively, it may be further understood that the information requested by the second NWDAF includes the first information and the third information. In step 401, that the second NWDAF sends the first request message to the first NWDAF may be specifically: When the indications of the plurality of pieces of information that are in the token include the indication of the first information but do not include the indication of the third information, the second NWDAF sends the first request message to the first NWDAF, where the first request message does not include the indication of the third information. In other words, before sending the first request message, the second NWDAF determines that the indications that are in the token and that are of the plurality of pieces of information that correspond to the identifier of the second PLMN include the indication of the first information but do not include the indication of the third information, that is, determines that the second NWDAF is allowed to access the first information but is not allowed to access the third information. Further, the second NWDAF filters out, from an indication of information that the second NWDAF needs to access, the indication of the third information that the second NWDAF is not allowed to access, that is, the first request message sent to the first NWDAF does not include the indication of the third information that the second NWDAF is not allowed to access. This helps improve the success rate of obtaining the information by the second NWDAF and reduce communication load.

For example, the indications of the plurality of pieces of roaming data that are included in the token and that correspond to the identifier of the second PLMN are specifically the event identifier 1 and an event identifier 3. The second NWDAF needs to request roaming data indicated by the event identifier 1 and the event identifier 2. Therefore, the second NWDAF may send a request message to the first NWDAF, and the request message includes the event identifier 1 but does not include the event identifier 2. Correspondingly, the first NWDAF may determine that roaming data indicated by the event identifier 1 is allowed to be accessed by the second NWDAF, and then send, to the second NWDAF, the roaming data indicated by the event identifier 1.

In addition, the second NWDAF may further determine, based on the indications that are in the token and that are of the plurality of pieces of information that correspond to the identifier of the second PLMN and the indication of the information that the second NWDAF needs to request, information that is not to be requested from the first NWDAF, in other words, information that does not need to be requested by the second NWDAF from the first NWDAF when the indications that are in the token and that are of the plurality of pieces of information that correspond to the identifier of the second PLMN do not include an indication of any piece of information that the second NWDAF needs to request. In this way, unnecessary interaction procedures are reduced. Optionally, when the information that the second NWDAF needs to request is a roaming analytics result, the second NWDAF may reject an analytics result request message of the second NF.

In the foregoing technical solution, the first NWDAF determines, based on the indications of the plurality of pieces of information that are included in the token, whether the information requested by the second NWDAF is allowed to be obtained by the second NWDAF, to complete authentication on accessing roaming information by the second NWDAF. This helps improve security of inter-PLMN information sharing. Further, in comparison with a solution in which a local policy is configured in the first NWDAF to perform authentication on access of the second NWDAF, in this application, the local policy does not need to be configured in the first NWDAF. This helps reduce configuration complexity. In addition, the second NWDAF may request a plurality of pieces of different information (for example, the first information and the second information) from the first NWDAF based on the same token, and does not need to first request a token corresponding to the information each time before requesting the information. This reduces authentication complexity and communication overheads.

It should be added that, for explanations of terms or nouns in the embodiments related to FIG. 3 and FIG. 4, reference may be made to each other. There may be an association relationship between the two procedures in FIG. 3 and FIG. 4. Specifically, when the second NWDAF needs to request information from the first NWDAF, the second NWDAF may first request the token from the first NRF (that is, the embodiment related to FIG. 3). After obtaining the token through requesting, the second NWDAF may request information from the first NWDAF based on the token (that is, the embodiment related to FIG. 4). In other words, the embodiment related to FIG. 4 is after the embodiment related to FIG. 3. Further, after obtaining the token through requesting, the second NWDAF may request a plurality of pieces of information (for example, the first information and the second information) from the first NWDAF based on the token. In other words, there may be one or more corresponding procedures in FIG. 4 after the procedure in FIG. 3.

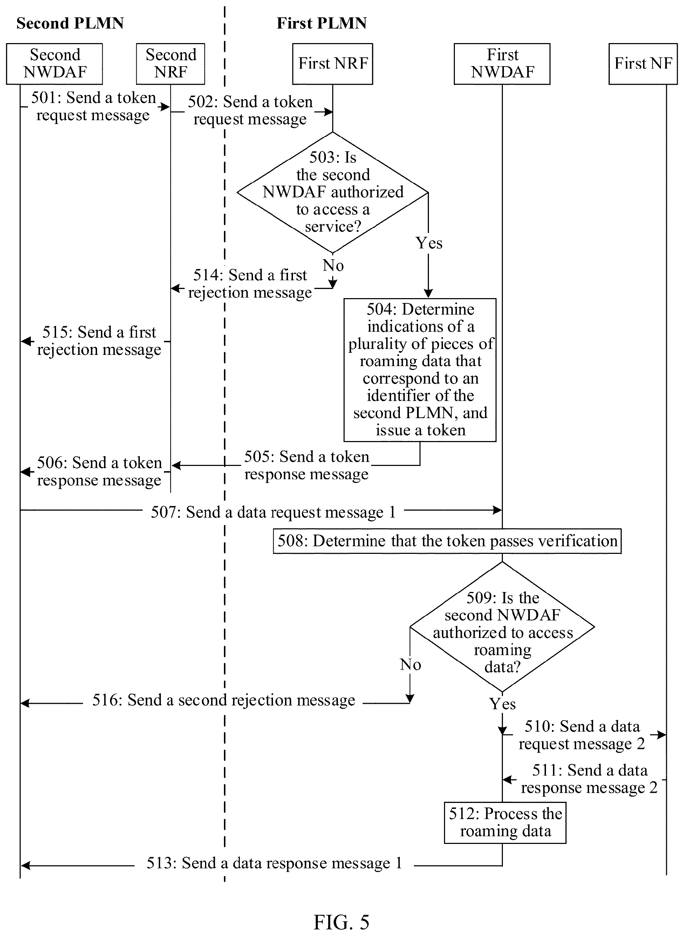

To better explain embodiments of this application, FIG. 5 is a schematic flowchart of an example of requesting roaming data in an inter-PLMN manner according to this application.

Step 501: A second NWDAF sends a token request message to a second NRF. Correspondingly, the second NRF receives the token request message from the second NWDAF. The token request message includes an identifier of a second PLMN. The token request message may be specifically Nnrf_ AccessToken_AccessToken_Get Request.

Step 502: The second NRF sends a token request message to a first NRF. Correspondingly, the first NRF receives the token request message from the second NRF. For descriptions of the token request message, refer to the descriptions in step 501.

Step 503: The first NRF determines, based on a local policy of the first NRF and the token request message, whether the second NWDAF is authorized to access a roaming data request service; and performs step 504 if the second NWDAF is authorized to access the roaming data request service, or performs step 514 and step 515 if the second NWDAF is not authorized to access the roaming data request service, where the local policy of the first NRF may be at a PLMN granularity.

Step 504: The first NRF determines, based on preconfigured information, indications of a plurality of pieces of roaming data that correspond to the identifier of the second PLMN, and issues a token, where the token includes the indications of the plurality of pieces of roaming data that correspond to the identifier of the second PLMN.

With reference to Table 1, for example, if the identifier of the second PLMN is a PLMN 1, and indications of two pieces of roaming data that correspond to the PLMN 1 are respectively a data specification 1 and a data specification 3, the token includes the data specification 1 and the data specification 3.

Step 505: The first NRF sends a token response message to the second NRF. Correspondingly, the second NRF receives the token response message from the first NRF. The token response message includes the token. The token response message may be specifically Nnrf_AccessToken_Get response.

Step 506: The second NRF sends a token response message to the second NWDAF. Correspondingly, the second NWDAF receives the token response message from the second NRF. For descriptions of the token response message, refer to the descriptions in step 505.

Step 507: The second NWDAF sends a data request message 1 to a first NWDAF. Correspondingly, the first NWDAF receives the data request message 1 from the second NWDAF. The data request message 1 includes the token and an indication of roaming data requested by the second NWDAF. The data request message 1 may be specifically Nnwdaf_RoamingData_Subscribe.

With reference to the example in step 504, examples are further provided. In an example A, if the indication of the roaming data requested by the second NWDAF is the data specification 1, the data request message 1 includes the data specification 1 and the token. In an example B, if the indication of the roaming data requested by the second NWDAF is a data specification 2, the data request message 1 includes the data specification 2 and the token.

Step 508: The first NWDAF determines that the token in the data request message 1 passes verification.

Step 509: The first NWDAF determines, based on the token, whether the second NWDAF is authorized to access the roaming data requested by the second NWDAF; and performs step 510 if the second NWDAF is authorized to access the roaming data requested by the second NWDAF, or performs step 516 if the second NWDAF is not authorized to access the roaming data requested by the second NWDAF.

With reference to the example A in step 507, the first NWDAF determines, based on the data specification 1 and the data specification 3 that are in the token, and the data specification 1 in the data request message 1, that the second NWDAF is authorized to access roaming data indicated by the data specification 1. With reference to the example B in step 507, the first NWDAF determines, based on the data specification 1 and the data specification 3 that are in the token, and the data specification 2 in the data request message 1, that the second NWDAF is not authorized to access roaming data indicated by the data specification 2.

Step 510: The first NWDAF sends a data request message 2 to a first NF, where the data request message 2 includes the indication (for example, the data specification 1) of the roaming data requested by the second NWDAF. Correspondingly, the first NF receives the data request message 2 from the first NWDAF, and determines the roaming data indicated by the indication (for example, the data specification 1) in the data request message 2. The data request message 2 may be specifically Nnf_EventExposure_Subscribe.

Step 511: The first NF sends a data response message 2 to the first NWDAF. Correspondingly, the first NWDAF receives the data response message 2 from the first NF. The data response message 2 includes the roaming data requested by the second NWDAF (for example, the data indicated by the data specification 1). The data response message 2 may be specifically Nnf_EventExposure_Notify.

Step 512: The first NWDAF processes the roaming data in the data response message 2 according to a security policy.

Step 513: The first NWDAF sends a data response message 1 to the second NWDAF. Correspondingly, the second NWDAF receives the data response message 1 from the first NWDAF. The data response message 1 includes processed roaming data. The data response message 1 may be specifically Nnwdaf_RoamingData_Notify.

Step 514: The first NRF sends a first rejection message to the second NRF.

Step 515: The second NRF sends a first rejection message to the second NWDAF.

Step 516: The first NWDAF sends a second rejection message to the second NWDAF.

It should be added that, in step 501 or step 502, the token request message may include the identifier of the second PLMN, and also include a slice identifier. Correspondingly, in step 504, the first NRF determines, based on the preconfigured information, the indications of the plurality of pieces of roaming data that correspond to the identifier of the second PLMN and the slice identifier, and issues the token.

It may be understood that, the embodiment related to FIG. 5 is a specific implementation of the embodiments related to FIG. 3 and FIG. 4 in a roaming data requesting scenario. For steps and/or terms that are not described in detail in FIG. 5, refer to descriptions in the embodiments related to FIG. 3 and FIG. 4.

Specifically, step 501 to step 506 are a procedure in which the first NRF generates and sends the token in response to the token request message from the second NWDAF. For specific implementation of step 501 and step 502, refer to the descriptions in step 301. For specific implementation of step 503 and step 504, refer to the descriptions in step 302. For specific implementation of step 505 and step 506, refer to the descriptions in step 303. Step 514 and step 515 are a procedure in which the first NRF rejects the token request message from the second NWDAF. For specific implementation, refer to the descriptions following step 303 that the preconfigured information of the first NRF does not include the identifier of the second PLMN (or the identifier of the second PLMN and a target slice identifier).

Step 507 to step 513 are a procedure in which the second NWDAF requests the roaming data from the first NWDAF. For specific implementation of step 507, refer to the descriptions in step 401. For specific implementation of step 508 to step 513, refer to the descriptions in step 402. Step 516 is a procedure in which the first NWDAF rejects requesting the roaming data by the second NWDAF. For specific implementation, refer to the descriptions following step 402 and that are about that the first NWDAF determines that the second NWDAF is not authorized to access information requested by the second NWDAF.

Further, when the data request message 1 includes an indication of first information, the data request message 1 is a first request message. Correspondingly, the data response message 1 is a first response message. When the data request message 1 includes an indication of second information, the data request message 1 is a second request message. Correspondingly, the data response message 1 is a second response message. When the data request message 1 includes an indication of third information, the data request message 1 is a third request message. Correspondingly, the first NWDAF sends the second rejection message to the second NWDAF.

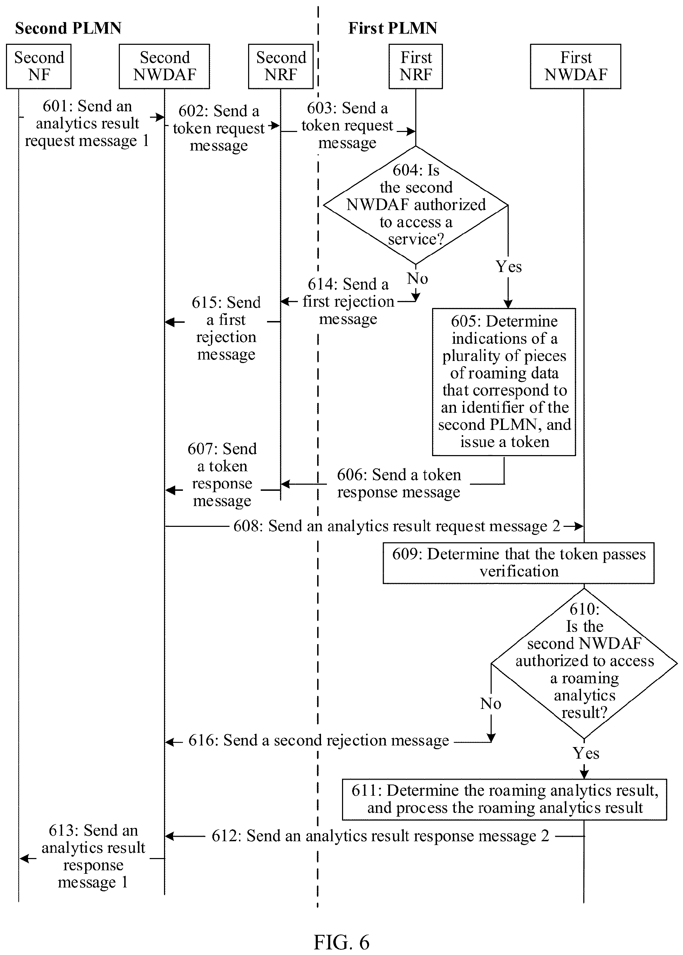

FIG. 6 is a schematic flowchart of an example of requesting a roaming analytics result in an inter-PLMN manner according to this application.

Step 601: A second NF sends an analytics result request message 1 to a second NWDAF. Correspondingly, the second NWDAF receives the analytics result request message 1 from the second NF, where the analytics result request message 1 includes an identifier of a roaming analytics result requested by the second NF. The analytics result request message 1 may be specifically Analytics_Subscribe or Analytics_Request.

Step 602: The second NWDAF sends a token request message to a second NRF. Correspondingly, the second NRF receives the token request message from the second NWDAF. The token request message includes an identifier of a second PLMN. The token request message may be specifically Nnrf_AccessToken_AccessToken_Get Request.

Step 603: The second NRF sends a token request message to a first NRF. Correspondingly, the first NRF receives the token request message from the second NRF. For descriptions of the token request message, refer to the descriptions in step 602.

Step 604: The first NRF determines, based on a local policy of the first NRF and the token request message, whether the second NWDAF is authorized to access a roaming analytics request service; and performs step 605 if the second NWDAF is authorized to access the roaming analytics request service, or performs step 614 and step 615 if the second NWDAF is not authorized to access the roaming analytics result request service, where the local policy of the first NRF may be at a PLMN granularity.

Step 605: The first NRF determines, based on preconfigured information, indications of a plurality of roaming analytics results that correspond to the identifier of the second PLMN, and issues a token, where the token includes the indications of the plurality of roaming analytics results that correspond to the identifier of the second PLMN.

Step 606: The first NRF sends a token response message to the second NRF. Correspondingly, the second NRF receives the token response message from the first NRF. The token response message includes the token, and the token response message may be specifically Nnrf_AccessToken_Get response.

Step 607: The second NRF sends a token response message to the second NWDAF. Correspondingly, the second NWDAF receives the token response message from the second NRF. For descriptions of the token response message, refer to the descriptions in step 606.

Step 608: The second NWDAF sends an analytics result request message 2 to a first NWDAF. Correspondingly, the first NWDAF receives the analytics result request message 2 from the second NWDAF. The analytics result request message 2 may include the token and an indication of a roaming analytics result requested by the second NWDAF (or the second NF). The analytics result request message 2 may be specifically Nnwdaf_RoamingAnalytics_Subscribe or Nnwdaf_RoamingAnalytics_Request.

Step 609: The first NWDAF determines that the token in the analytics result request message 2 passes verification.

Step 610: The first NWDAF determines, based on the token, whether the second NWDAF is authorized to access the roaming analytics result requested by the second NWDAF; and performs step 611 if the second NWDAF is authorized to access the roaming analytics requested by the second NWDAF, or performs step 616 if the second NWDAF is not authorized to access the roaming analytics requested by the second NWDAF.

Step 611: The first NWDAF determines, from a local roaming analytics result of the first NWDAF based on the indication of the roaming analytics result requested by the second NWDAF, the roaming analytics result requested by the second NWDAF, and the first NWDAF processes the determined roaming analytics result according to a security policy.

Step 612: The first NWDAF sends an analytics result response message 2 to the second NWDAF, where the analytics result response message 2 includes the roaming analytics result requested by the second NWDAF (or the second NF). Correspondingly, the second NWDAF receives the analytics result response message 2 from the first NWDAF. The analytics result response message 2 may be specifically Nnwdaf_RoamingAnalytics_response or Nnwdaf_RoamingAnalytics_notify.

Step 613: The second NWDAF sends an analytics result response message 1 to the second NF, where the analytics result response message 1 includes the roaming analytics result requested by the second NWDAF (or the second NF). Correspondingly, the second NF receives the analytics result response message 1 from the second NWDAF. The analytics result response message 1 may be specifically Analytics_response or Analytics _notify.

Step 614: The first NRF sends a first rejection message to the second NRF.

Step 615: The second NRF sends a first rejection message to the second NWDAF.

Step 616: The first NWDAF sends a second rejection message to the second NWDAF.

It should be added that, in step 602 or step 603, the token request message may include the identifier of the second PLMN, and also include a slice identifier. Correspondingly, in step 605, the first NRF determines, based on the preconfigured information, the indications of the plurality of roaming analytics results that correspond to the identifier of the second PLMN and the slice identifier, and issues the token.

It may be understood that, the embodiment related to FIG. 6 is a specific implementation of the embodiments related to FIG. 3 and FIG. 4 in a roaming analytics result requesting scenario. For steps and/or terms that are not described in detail in FIG. 6, refer to descriptions in the embodiments related to FIG. 3 and FIG. 4.

Specifically, step 602 to step 607 are a procedure in which the first NRF generates and sends the token in response to the token request message from the second NWDAF. For specific implementation of step 602 and step 603, refer to the descriptions in step 301. For specific implementation of step 604 and step 605, refer to the descriptions in step 302. For specific implementation of step 606 and step 607, refer to the descriptions in step 303. Step 614 and step 615 are a procedure in which the first NRF rejects the token request message from the second NWDAF. For specific implementation, refer to the descriptions following step 303 that the preconfigured information of the first NRF does not include the identifier of the second PLMN (or the identifier of the second PLMN and a target slice identifier).

Step 608 to step 612 are a procedure in which the second NWDAF requests the roaming analytics result from the first NWDAF. For specific implementation of step 608, refer to the descriptions in step 401. For specific implementation of step 609 to step 612, refer to the descriptions in step 402. Step 616 is a procedure in which the second NWDAF rejects requesting the roaming analytics result by the second NWDAF. For specific implementation, refer to the descriptions following step 402 and that are about that the first NWDAF determines that the second NWDAF is not authorized to access information requested by the second NWDAF.

Step 601 and step 613 are a procedure in which the second NF requests the roaming analytics result from the second NWDAF. For specific implementation, refer to the descriptions that are in step 401 and step 402 and that are about that the second NF requests the roaming analytics result from the second NWDAF.

Further, when the analytics result request message 2 includes an indication of first information, the analytics result request message 2 is a first request message. Correspondingly, the analytics result response message 2 is a first response message. When the analytics result request message 2 includes an indication of second information, the analytics result request message 2 is a second request message. Correspondingly, the analytics result response message 2 is a second response message. When the analytics result request message 2 includes an indication of third information, the analytics result request message 2 is a third request message. Correspondingly, the first NWDAF sends the second rejection message to the second NWDAF.

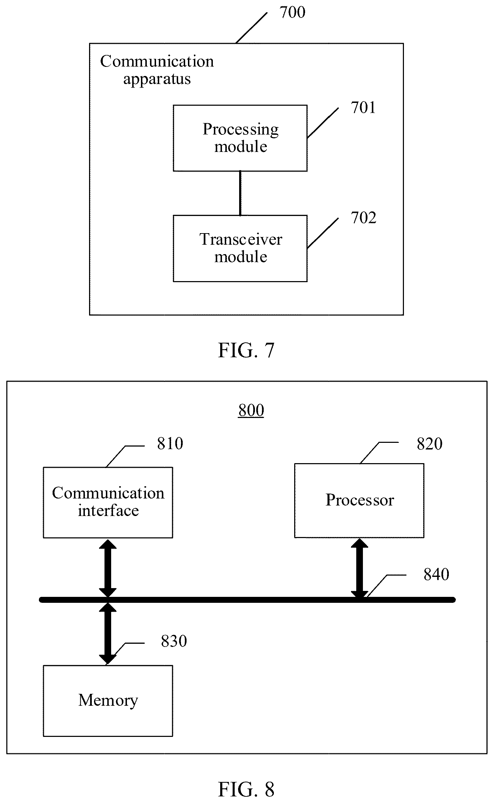

Based on the foregoing content and a same concept, FIG. 7 and FIG. 8 are diagrams of structures of possible communication apparatuses according to this application. These communication apparatuses may be configured to implement a function of the first NRF, the first NWDAF, the first NF, the second NRF, the second NWDAF, or the second NF in the foregoing method embodiments. Therefore, beneficial effects of the foregoing method embodiments can also be implemented. A communication apparatus 700 includes a processing module 701 and a transceiver module 702. The processing module is configured to support the communication apparatus 700 in performing corresponding functions in the foregoing method embodiments. The transceiver module is configured to support communication between the communication apparatus 700 and another communication device. For example, when the apparatus is a first NWDAF, the apparatus may receive a first request message from a second NWDAF. The communication apparatus may further include a storage module. The storage module is coupled to the processing module, and stores program code instructions and data that are necessary for the apparatus.

For example, when the communication apparatus 700 is configured to implement the function of the first NWDAF in the foregoing method embodiment,
the transceiver module 702 is configured to receive the first request message from the second NWDAF, where the first request message includes a token and an indication of requested first information, the token includes indications of a plurality of pieces of information, and the plurality of pieces of information are allowed to be accessed by a second PLMN. When the indications of the plurality of pieces of information that are included in the token include the indication of the first information, the transceiver module 702 is further configured to send the first information to the second NWDAF. Optionally, when determining that the indications of the plurality of pieces of information include the indication of the first information, the processing module 701 controls the transceiver module 702 to send the first information to the second NWDAF.

For example, when the communication apparatus 700 is configured to implement the function of the first NRF in the foregoing method embodiment,
the transceiver module 702 is configured to receive a token request message, where the token request message includes an identifier of a second PLMN. After the processing module 701 determines indications of a plurality of pieces of information that correspond to the identifier of the second PLMN, the transceiver module 702 sends a token, where the token includes the indications of the plurality of pieces of information that correspond to the identifier of the second PLMN, and the plurality of pieces of information corresponding to the identifier of the second PLMN are allowed to be accessed by the second PLMN.

Division into modules in this embodiment of this application is an example, is only logical function division, and may be other division during actual implementation. In addition, function modules in embodiments of this application may be integrated into one processor, each of the modules may exist alone physically, or two or more modules may be integrated into one module. The integrated module may be implemented in a form of hardware, or may be implemented in a form of a software functional module.

FIG. 8 shows an apparatus 800 according to an embodiment of this application. The apparatus shown in FIG. 8 may be an implementation of a hardware circuit of the apparatus shown in FIG. 7. The apparatus is applicable to the flowchart shown above, and performs a function of the first NRF, the first NWDAF, the first NF, the second NRF, the second NWDAF, or the second NF in the foregoing method embodiments. For ease of description, FIG. 8 shows only main components of the apparatus.

The apparatus 800 shown in FIG. 8 includes a communication interface 810, a processor 820, and a memory 830. The memory 830 is configured to store program code instructions and/or data. The processor 820 may cooperate with the memory 830. The processor 820 may execute the program code instructions stored in the memory 830. When the instructions or a program stored in the memory 830 is executed, the processor 820 is configured to perform an operation performed by the processing module 701 in the foregoing embodiment, and the communication interface 810 is configured to perform an operation performed by the transceiver module 702 in the foregoing embodiment.

The memory 830 is coupled to the processor 820. The coupling in this embodiment of this application may be an indirect coupling or a communication connection between apparatuses, units, or modules in an electrical form, a mechanical form, or another form, and is used for information exchange between the apparatuses, the units, or the modules. At least one of memories 830 may be included in the processor 820.

In this embodiment of this application, the communication interface may be a transceiver, a circuit, a bus, a module, or a communication interface of another type. In this embodiment of this application, when the communication interface is the transceiver, the transceiver may include an independent receiver and an independent transmitter, or may be a transceiver integrated with a transceiver function or a communication interface.

The apparatus 800 may further include a communication line 840. The communication interface 810, the processor 820, and the memory 830 may be connected to each other through the communication line 840. The communication line 840 may be a peripheral component interconnect (peripheral component interconnect, PCI for short) bus, an extended industry standard architecture (extended industry standard architecture, EISA for short) bus, or the like. The communication line 840 may be classified into an address bus, a data bus, a control bus, and the like. For ease of representation, only one thick line is used to represent the bus in FIG. 8, but this does not mean that there is only one bus or only one type of bus.

Based on the foregoing content and a same concept, this application provides a communication system. The communication system includes one or more of the following apparatuses: a first NRF, a first NWDAF, a first NF, a second NRF, a second NWDAF, and a second NF. Further, the first NRF, the first NWDAF, and the first NF are located in a first PLMN, and the second NRF, the second NWDAF, and the second NF are located in a second PLMN. The communication system may be configured to perform the communication method in this application. For details, refer to the foregoing embodiments.

In a possible implementation, the first NRF is configured to: receive a token request message, where the token request message includes an identifier of the second PLMN; determine indications of a plurality of pieces of information that correspond to the identifier of the second PLMN; and send a token, where the token includes the indications of the plurality of pieces of information that correspond to the identifier of the second PLMN, and the plurality of pieces of information corresponding to the identifier of the second PLMN are allowed to be accessed by the second PLMN. The first NWDAF is configured to: receive a first request message from the second NWDAF, where the first request message includes the token and an indication of requested first information; and when the indications of the plurality of pieces of information that are in the token include the indication of the first information, send the first information to the second NWDAF.

In a possible implementation, the indications of the plurality of pieces of information that correspond to the identifier of the second PLMN include the indication of the first information and an indication of second information, the first information is information requested by using the first request message, the second information is information requested by using a second request message, the first request message and the second request message are from the second NWDAF in the second PLMN, and the first information is different from the second information.

In a possible implementation, the second NWDAF is configured to: send a token request message; and receive the token. In a possible implementation, the second NWDAF is further configured to: send the first request message to the first NWDAF; and receive the first information from the first NWDAF.

In a possible implementation, the first information is roaming data. The first NF is configured to: receive a data request message from the first NWDAF, where the data request message includes an indication of the roaming data; and send the roaming data to the first NWDAF. Before sending the first information to the second NWDAF, the first NWDAF is further configured to: send the data request message to the first NF; and receive the first information from the first NF.

In a possible implementation, the first information is a roaming analytics result. The second NF is configured to: send an indication of the roaming analytics result to the second NWDAF; and receive the roaming analytics result from the second NWDAF. Before sending the first request message to the first NWDAF, the second NWDAF is further configured to receive the indication of the first information from the second NF. After receiving the first information from the first NWDAF, the second NWDAF is further configured to send the first information to the second NF. Before sending the first information to the second NWDAF, the first NWDAF is further configured to: based on the indication of the roaming analytics result and an analytics result of the first NWDAF, determine the roaming analytics result.

Based on the foregoing content and a same concept, this application provides a computer-readable storage medium. The storage medium stores a computer program or instructions. When the computer program or the instructions are executed by a communication apparatus, the method in the foregoing method embodiment is implemented, the method performed by the first NRF in the foregoing method embodiment is implemented, the method performed by the first NWDAF in the foregoing method embodiment is implemented, the method performed by the first NF in the foregoing method embodiment is implemented, the method performed by the second NRF in the foregoing method embodiment is implemented, the method performed by the second NWDAF in the foregoing method embodiment is implemented, or the method performed by the second NF in the foregoing method embodiment is implemented.

Based on the foregoing content and a same concept, this application provides a computer program product. The computer program product includes a computer program or instructions. When the computer program or the instructions are executed by a communication apparatus, the method in the foregoing method embodiment is implemented, the method performed by the first NRF in the foregoing method embodiment is implemented, the method performed by the first NWDAF in the foregoing method embodiment is implemented, the method performed by the first NF in the foregoing method embodiment is implemented, the method performed by the second NRF in the foregoing method embodiment is implemented, the method performed by the second NWDAF in the foregoing method embodiment is implemented, or the method performed by the second NF in the foregoing method embodiment is implemented.

Based on the foregoing content and a same concept, this application provides a chip system, including: a processor. The processor is coupled to a memory, and the memory is configured to store a program or instructions. When the program or the instructions are executed by the processor, the chip system is enabled to implement the method in the foregoing method embodiment, implement the method performed by the first NRF in the foregoing method embodiment, implement the method performed by the first NWDAF in the foregoing method embodiment, implement the method performed by the first NF in the foregoing method embodiment, implement the method performed by the second NRF in the foregoing method embodiment, implement the method performed by the second NWDAF in the foregoing method embodiment, or implement the method performed by the second NF in the foregoing method embodiment. Optionally, the chip system further includes an interface circuit, and the interface circuit is configured to exchange code instructions with the processor. Optionally, there may be one or more processors in the chip system, and the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. Optionally, there may also be one or more memories in the chip system. The memory may be integrated with the processor, or may be disposed separately from the processor. For example, the memory may be a non-transitory processor, for example, a read-only memory ROM. The memory and the processor may be integrated on a same chip, or may be separately disposed on different chips.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

It is clear that a person skilled in the art can make various modifications and variations to this application without departing from the protection scope of this application. This application is intended to cover these modifications and variations of this application provided that they fall within the scope of protection defined by the following claims and their equivalent technologies.

## Claims

1. A communication method, applicable to a roaming scenario comprising a first public land mobile network PLMN and a second PLMN, wherein the first PLMN comprises a first network data analytics function NWDAF, and the second PLMN comprises a second NWDAF; and
the method comprises:
receiving, by the first NWDAF, a first request message from the second NWDAF, wherein the first request message comprises a token and an indication of requested first information, the token comprises indications of a plurality of pieces of information, and the plurality of pieces of information are allowed to be accessed by the second PLMN; and
when the indications of the plurality of pieces of information comprise the indication of the first information, sending, by the first NWDAF, the first information to the second NWDAF.

2. The method according to claim 1, further comprising:
receiving, by the first NWDAF, a second request message from the second NWDAF, wherein the second request message comprises the token and an indication of requested second information, and the first information is different from the second information; and
when the indications of the plurality of pieces of information comprise the indication of the second information, sending, by the first NWDAF, the second information to the second NWDAF.

3. The method according to claim 1 or 2, wherein before the sending, by the first NWDAF, the first information to the second NWDAF, the method further comprises:
determining, by the first NWDAF, that the token passes verification.

4. The method according to any one of claims 1 to 3, wherein the information is roaming data.

5. The method according to any one of claims 1 to 4, wherein the indication of the information comprises one or more of the following: a data specification, an event identifier, event filter information, target of event reporting, and a bulked data type parameter.

6. The method according to any one of claims 1 to 3, wherein the information is a roaming analytics result.

7. The method according to any one of claims 1 to 3, or 6, wherein the indication of the information comprises one or more of the following: an analytics specification, an analytics identifier, an event identifier, and target of analytics reporting.

8. The method according to any one of claims 1 to 7, wherein the first PLMN further comprises a first network repository function NRF, and the method comprises:
receiving, by the first NRF, a token request message, wherein the token request message comprises an identifier of the second PLMN;
determining, by the first NRF, the indications of the plurality of pieces of information that correspond to the identifier of the second PLMN; and
sending, by the first NRF, the token, wherein the token comprises the indications of the plurality of pieces of information.

9. The method according to claim 8, wherein the determining, by the first NRF, the indications of the plurality of pieces of information that correspond to the identifier of the second PLMN comprises:
determining, by the first NRF based on preconfigured information, the indications of the plurality of pieces of information that correspond to the identifier of the second PLMN, wherein
the preconfigured information comprises a correspondence between the identifier of the second PLMN and the indications of the plurality of pieces of information.

10. The method according to claim 8 or 9, wherein the token request message further comprises a slice identifier, and the preconfigured information comprises a correspondence between the identifier of the second PLMN, the slice identifier, and the indications of the plurality of pieces of information; and
the determining, by the first NRF based on preconfigured information, the indications of the plurality of pieces of information that correspond to the identifier of the second PLMN comprises:
determining, by the first NRF based on the preconfigured information, the indications of the plurality of pieces of information that correspond to the identifier of the second PLMN and the slice identifier.

11. The method according to any one of claims 8 to 10, wherein the token request message further comprises a network function NF service name; and
the determining, by the first NRF, the indications of the plurality of pieces of information that correspond to the identifier of the second PLMN comprises:
when the NF service name indicates to request roaming data or request a roaming analytics result, determining, by the first NRF, the indications of the plurality of pieces of information that correspond to the identifier of the second PLMN.

12. The method according to any one of claims 1 to 11, further comprising:
sending, by the second NWDAF, a token request message, wherein the token request message comprises the identifier of the second PLMN; and
receiving, by the second NWDAF, the token.

13. The method according to any one of claims 1 to 12, further comprising:
sending, by the second NWDAF, the first request message to the first NWDAF; and
receiving, by the second NWDAF, the first information from the first NWDAF.

14. The method according to claim 13, wherein the sending, by the second NWDAF, the first request message to the first NWDAF comprises:
when the indications of the plurality of pieces of information comprise the indication of the first information, sending, by the second NWDAF, the first request message to the first NWDAF.

15. The method according to claim 13 or 14, wherein information requested by the second NWDAF comprises the first information and third information; and
the sending, by the second NWDAF, the first request message to the first NWDAF comprises:
when the indications of the plurality of pieces of information comprise the indication of the first information but do not comprise an indication of the third information, sending, by the second NWDAF, the first request message to the first NWDAF, wherein the first request message does not comprise the indication of the third information.

16. A communication method, applicable to a roaming scenario comprising a first public land mobile network PLMN and a second PLMN, wherein the first PLMN comprises a first network repository function NRF; and
the method comprises:
receiving, by the first NRF, a token request message, wherein the token request message comprises an identifier of the second PLMN;
determining, by the first NRF, indications of a plurality of pieces of information that correspond to the identifier of the second PLMN; and
sending, by the first NRF, a token, wherein the token comprises the indications of the plurality of pieces of information that correspond to the identifier of the second PLMN, and the plurality of pieces of information corresponding to the identifier of the second PLMN are allowed to be accessed by the second PLMN.

17. The method according to claim 16, wherein the indications of the plurality of pieces of information that correspond to the identifier of the second PLMN comprise an indication of first information and an indication of second information, the first information is information requested by using a first request message, the second information is information requested by using a second request message, the first request message and the second request message are from a network data analytics function NWDAF in the second PLMN, and the first information is different from the second information.

18. The method according to claim 16 or 17, wherein the determining, by the first NRF, indications of a plurality of pieces of information that correspond to the identifier of the second PLMN comprises:
determining, by the first NRF based on preconfigured information, the indications of the plurality of pieces of information that correspond to the identifier of the second PLMN, wherein
the preconfigured information comprises a correspondence between the identifier of the second PLMN and the indications of the plurality of pieces of information.

19. The method according to claim 18, wherein the token request message further comprises a slice identifier, and the preconfigured information comprises a correspondence between the identifier of the second PLMN, the slice identifier, and the indications of the plurality of pieces of information; and
the determining, by the first NRF based on preconfigured information, the indications of the plurality of pieces of information that correspond to the identifier of the second PLMN comprises:
determining, by the first NRF based on the preconfigured information, the indications of the plurality of pieces of information that correspond to the identifier of the second PLMN and the slice identifier.

20. The method according to any one of claims 16 to 19, wherein the token request message further comprises a network function NF service name; and
the determining, by the first NRF, indications of a plurality of pieces of information that correspond to the identifier of the second PLMN comprises:
when the NF service name indicates to request roaming data or request a roaming analytics result, determining, by the first NRF, the indications of the plurality of pieces of information that correspond to the identifier of the second PLMN.

21. The method according to any one of claims 16 to 20, wherein the information is roaming data.

22. The method according to any one of claims 16 to 21, wherein the indication of the information comprises one or more of the following: a data specification, an event identifier, event filter information, target of event reporting, and a bulked data type parameter.

23. The method according to any one of claims 16 to 20, wherein the information is a roaming analytics result.

24. The method according to any one of claims 16 to 20, or 23, wherein the indication of the information comprises one or more of the following: an analytics specification, an analytics identifier, an event identifier, and target of analytics reporting.

25. The method according to any one of claims 16 to 24, wherein the second PLMN comprises a second NWDAF; and
the method further comprises:
sending, by the second NWDAF, a token request message; and
receiving, by the second NWDAF, the token.

26. The method according to any one of claims 16 to 25, wherein the first PLMN further comprises a first NWDAF, and the second PLMN comprises the second NWDAF; and
the method further comprises:
sending, by the second NWDAF, the first request message to the first NWDAF, wherein the first request message comprises the token and the indication of the requested first information; and
receiving, by the second NWDAF, the first information from the first NWDAF.

27. The method according to claim 26, wherein the sending, by the second NWDAF, the first request message to the first NWDAF comprises:
when the indications of the plurality of pieces of information comprise the indication of the first information, sending, by the second NWDAF, the first request message to the first NWDAF.

28. The method according to claim 26 or 27, wherein information requested by the second NWDAF comprises the first information and third information; and
the sending, by the second NWDAF, the first request message to the first NWDAF comprises:
when the indications of the plurality of pieces of information comprise the indication of the first information but do not comprise an indication of the third information, sending, by the second NWDAF, the first request message to the first NWDAF, wherein the first request message does not comprise the indication of the third information.

29. A communication method, applicable to a roaming scenario comprising a first public land mobile network PLMN and a second PLMN, wherein the first PLMN comprises a first network data analytics function NWDAF, and the second PLMN comprises a second NWDAF; and
the method comprises:
sending, by the second NWDAF, a first request message to the first NWDAF, wherein the first request message comprises a token and an indication of requested first information, the token comprises indications of a plurality of pieces of information, the plurality of pieces of information are allowed to be accessed by the second PLMN, and the indications of the plurality of pieces of information comprise the indication of the first information; and
receiving, by the second NWDAF, the first information from the first NWDAF.

30. The method according to claim 29, further comprising:
sending, by the second NWDAF, a token request message, wherein the token request message comprises an identifier of the second PLMN; and
receiving, by the second NWDAF, the token.

31. The method according to claim 30, wherein the token request message further comprises a slice identifier, and the identifier of the second PLMN and the slice identifier jointly correspond to the indications of the plurality of pieces of information.

32. The method according to claim 30 or 31, wherein the token request message further comprises a network function NF service name, and the NF service name indicates that the token request message is used to request roaming data or request a roaming analytics result.

33. The method according to any one of claims 29 to 32, wherein the sending, by the second NWDAF, a first request message to the first NWDAF comprises:
when the indications of the plurality of pieces of information comprise the indication of the first information, sending, by the second NWDAF, the first request message to the first NWDAF.

34. The method according to any one of claims 29 to 33, wherein information requested by the second NWDAF comprises the first information and third information; and
the sending, by the second NWDAF, a first request message to the first NWDAF comprises:
when the indications of the plurality of pieces of information comprise the indication of the first information but do not comprise an indication of the third information, sending, by the second NWDAF, the first request message to the first NWDAF, wherein the first request message does not comprise the indication of the third information.

35. The method according to any one of claims 29 to 34, wherein the information is roaming data.

36. The method according to any one of claims 29 to 35, wherein the indication of the information comprises one or more of the following: a data specification, an event identifier, event filter information, target of event reporting, and a bulked data type parameter.

37. The method according to any one of claims 29 to 34, wherein the information is a roaming analytics result.

38. The method according to any one of claims 29 to 34, or 37, wherein the indication of the information comprises one or more of the following: an analytics specification, an analytics identifier, an event identifier, and target of analytics reporting.

39. A communication system, comprising:
a first network repository function NRF and a first network data analytics function NWDAF, wherein the first NRF and the first NWDAF are located in a first public land mobile network PLMN, wherein
the first NRF is configured to:
receive a token request message, wherein the token request message comprises an identifier of a second PLMN;
determine indications of a plurality of pieces of information that correspond to the identifier of the second PLMN; and
send a token, wherein the token comprises the indications of the plurality of pieces of information that correspond to the identifier of the second PLMN, and the plurality of pieces of information corresponding to the identifier of the second PLMN are allowed to be accessed by the second PLMN; and
the first NWDAF is configured to:
receive a first request message from a second NWDAF in the second PLMN, wherein the first request message comprises the token and an indication of requested first information; and
when the indications of the plurality of pieces of information that are in the token comprise the indication of the first information, send the first information to the second NWDAF.

40. The system according to claim 39, wherein the indications of the plurality of pieces of information that correspond to the identifier of the second PLMN comprise the indication of the first information and an indication of second information, the second information is information requested by using a second request message, the second request message is from the second NWDAF, and the first information is different from the second information.

41. The system according to claim 39 or 40, wherein the communication system further comprises the second NWDAF, and the second NWDAF is configured to:
send a token request message to the first NRF via an NRF in the second PLMN; and
receive the token from the first NRF via the NRF in the second PLMN.

42. The system according to any one of claims 39 to 41, wherein the communication system further comprises the second NWDAF, and the second NWDAF is configured to:
send the first request message to the first NWDAF; and
receive the first information from the first NWDAF.

43. The system according to claim 42, wherein when sending the first request message to the first NWDAF, the second NWDAF is specifically configured to:
when the indications of the plurality of pieces of information that are in the token comprise the indication of the first information, send the first request message to the first NWDAF.

44. The system according to any one of claims 39 to 43, wherein the information is roaming data.

45. The system according to any one of claims 39 to 44, wherein the indication of the information comprises one or more of the following: a data specification, an event identifier, event filter information, target of event reporting, and a bulked data type parameter.

46. The system according to any one of claims 39 to 43, wherein the information is a roaming analytics result.

47. The system according to any one of claims 39 to 43, or 46, wherein the indication of the information comprises one or more of the following: an analytics specification, an analytics identifier, an event identifier, and target of analytics reporting.

48. A communication apparatus, comprising a processor and a communication interface, wherein the communication interface is configured to: receive a signal from a communication apparatus other than the communication apparatus, and transmit the signal to the processor; or send a signal from the processor to a communication apparatus other than the communication apparatus; and the processor is configured to implement, through a logic circuit or by executing code instructions, the method according to any one of claims 1 to 7, the method according to any one of claims 16 to 24, or the method according to any one of claims 29 to 38.

49. A communication apparatus, comprising a module configured to perform the method according to any one of claims 1 to 7; comprising a module configured to perform the method according to any one of claims 16 to 24; or comprising a module configured to perform the method according to any one of claims 29 to 38.

50. A computer-readable storage medium, wherein the storage medium stores a computer program or instructions; and when the computer program or the instructions are executed by a communication apparatus, the method according to any one of claims 1 to 7 is implemented, the method according to any one of claims 16 to 24 is implemented, or the method according to any one of claims 29 to 38 is implemented.

51. A computer program product, wherein the computer program product comprises a computer program or instructions, and when the computer program or the instructions are executed by a communication apparatus, the method according to any one of claims 1 to 7 is implemented, the method according to any one of claims 16 to 24 is implemented, or the method according to any one of claims 29 to 38 is implemented.
